# EUROPEAN PATENT APPLICATION

(11) **EP 4 524 917 A1**
(43) Date of publication of application: **19.03.2025**
(21) Application number: 23803486.2
(22) Date of filing: 28.04.2023
(51) Int. Cl.: G06V 40/20, G06T 7/00

(54) **EVALUATION METHOD, PROGRAM, AND EVALUATION SYSTEM**

(30) Priority: 12.05.2022 JP 2022079051
(71) Applicant: OMRON Corporation, Kyoto 600-8530 (JP)
(72) Inventor: YABUUCHI, Tomohiro, Kyoto-shi, Kyoto 600-8530 (JP); IWAMOTO, Naoto, Kyoto-shi, Kyoto 600-8530 (JP); SASAKI, Yuki, Kyoto-shi, Kyoto 600-8530 (JP)
(74) Representative: HGF
(86) International application number: PCT/JP2023/016829
(87) International publication number: WO 2023/219008

(57) **Abstract**

There is provided an evaluation method, a program and an evaluation system which enable improvement of accuracy of evaluation of a moving direction of a movable object. The evaluation method is performed by an arithmetic circuit accessible to a storage device storing a plurality of trained models. The plurality of trained models includes: a simplified model (the low resolution mode 5) trained to, in response to input of whole information based on a whole of a movable object in image information, output evaluation of a moving direction of the movable object; and a detailed model (the middle resolution mode 6, the high resolution mode 7) trained to, in response to input of the whole information and part information based on part(s) of the movable object, output evaluation of the moving direction of the movable object. The evaluation method includes, when a resolution of an image of the movable object detected from target image information is smaller than a threshold value, inputting the whole information into the simplified model to allow it to output evaluation of the moving direction of the movable object. The evaluation method includes; when the resolution is equal to or greater than the threshold value, inputting the whole information and the part information into the detailed model to allow it to output evaluation of the moving direction of the movable object.

## Description

### TECHNICAL FIELD

The present disclosure relates to evaluation methods, programs (computer programs) and evaluation systems.

### BACKGROUND ART

Non-patent literature 1 discloses a technique for predicting pedestrian crossing intention by use of a deep neural network model. According to non-patent literature 1, non-visual features are extracted from a vehicle's speed, a pedestrian's bounding box and pedestrian's pose key points, visual features extracted from local context of an image and global context of an image, and the pedestrian crossing intention is predicted by fusion of the non-visual features and the visual features.

### CITATION LIST

### NON-PATENT LITERATURE

NON-PATENT LITERATURE 1: Dongfang Yang, et al, "Predicting Pedestrian Crossing Intention with Feature Fusion and Spatio-Temporal Attention", [online], April 12, 2021, [searched April 11, 2022], Cornell University, Internet <URL: https://arxiv.org/abs/2104.05485>

### SUMMARY OF INVENTION

### TECHNICAL PROBLEM

The technique disclosed in non-patent literature 1 uses various types of information such as a vehicle's speed, a pedestrian's bounding box, pedestrian's pose key points, local context of an image and global context of an image, and therefore high accurate prediction of the pedestrian crossing intention can be expected.

In evaluation of a moving direction of a movable object such as predicting pedestrian crossing intention, accuracy of the various types of information itself as disclosed in non-patent literature may influence on accuracy of the evaluation of the moving direction of the movable object. Therefore, a simple increase in amount of information used for evaluation of the moving direction of the movable object may not always lead to improvement of accuracy of evaluation of the moving direction of the movable object.

The present disclosure provides an evaluation method, a program, and an evaluation system which enable improvement of accuracy of evaluation of a moving direction of a movable object.

### SOLUTION TO PROBLEM

An evaluation method according to one aspect of the present disclosure is an evaluation method performed by an arithmetic circuit accessible to a storage device storing a plurality of trained models. The plurality of trained models includes: a simplified model trained to, in response to input of one or plurality of pieces of whole information based on a whole of a movable object in image information, output evaluation of a moving direction of the movable object; and a detailed model trained to, in response to input of at least one of the one or plurality of pieces of whole information and one or plurality of pieces of part information based on one or plurality of parts of the movable object, output evaluation of the moving direction of the movable object. The evaluation method includes: when a resolution of an image of the movable object detected from target image information is smaller than a threshold value, selecting the simplified model from the plurality of trained models, and inputting the one or plurality of pieces of whole information of the movable object detected from the target image information, into the simplified model to allow the simplified model to output evaluation of the moving direction of the movable object detected from the target image information; and when the resolution is equal to or greater than the threshold value, selecting the detailed model from the plurality of trained models, and inputting at least one of the one or plurality of pieces of whole information as well as the one or plurality of pieces of part information, of the movable object detected from the target image information, into the detailed model, to allow the detailed model to output evaluation of the moving direction of the movable object detected from the target image information.

An evaluation method according to one aspect of the present disclosure is an evaluation method performed by an arithmetic circuit accessible to a storage device storing a plurality of trained models. The plurality of trained models includes: a simplified model trained to, in response to input of one or plurality of pieces of whole information based on a whole of a movable object in image information, output evaluation of a moving direction of the movable object; and a detailed model trained to, in response to input of at least one of the one or plurality of pieces of whole information and one or plurality of pieces of part information based on one or plurality of parts of the movable object, output evaluation of the moving direction of the movable object. The evaluation method includes: confirming that a resolution of an image of the movable object detected from target image information is smaller than a threshold value; selecting the simplified model from the plurality of trained models in response to confirming that the resolution is smaller than the threshold value; and inputting the one or plurality of pieces of whole information of the movable object detected from the target image information, into the simplified model to allow the simplified model to output evaluation of the moving direction of the movable object detected from the target image information.

An evaluation method according to one aspect of the present disclosure is an evaluation method performed by an arithmetic circuit accessible to a storage device storing a plurality of trained models. The plurality of trained models includes: a simplified model trained to, in response to input of one or plurality of pieces of whole information based on a whole of a movable object in image information, output evaluation of a moving direction of the movable object; and a detailed model trained to, in response to input of at least one of the one or plurality of pieces of whole information and one or plurality of pieces of part information based on one or plurality of parts of the movable object, output evaluation of the moving direction of the movable object. The evaluation method includes: confirming that a resolution of an image of the movable object detected from target image information is equal to or greater than a threshold value; selecting the detailed model from the plurality of trained models in response to confirming that the resolution is equal to or greater than the threshold value; and inputting at least one of the one or plurality of pieces of whole information as well as the one or plurality of pieces of part information, of the movable object detected from the target image information, into the detailed model, to allow the detailed model to output evaluation of the moving direction of the movable object detected from the target image information.

An evaluation method according to one aspect of the present disclosure is an evaluation method performed by an arithmetic circuit accessible to a storage device storing a plurality of trained models. The plurality of trained models includes: a first model trained to, in response to input of one or plurality of pieces of whole information based on a whole of a movable object in image information and one or plurality of pieces of first part information based on one or plurality of first parts of the movable object, output evaluation of a moving direction of the movable object; and a second model trained to, in response to input of at least one of the one or plurality of pieces of whole information, at least one of the one or plurality of pieces of first part information, and one or plurality of pieces of second part information based on one or plurality of second parts of the movable object, output evaluation of the moving direction of the movable object. The one or plurality of second parts are smaller than the one or plurality of first parts. The evaluation method includes: when a resolution of an image of the movable object detected from target image information is smaller than a threshold value, selecting the first model from the plurality of trained models, and inputting the one or plurality of pieces of whole information and the one or plurality of pieces of first part information, of the movable object detected from the target image information, into the first model, to allow the first model to output evaluation of the moving direction of the movable object detected from the target image information; and when the resolution is equal to or greater than the threshold value, selecting the second model from the plurality of trained models, and inputting at least one of the one or plurality of pieces of whole information, at least one of the one or plurality of pieces of first part information, and at least one of the one or plurality of pieces of second part information, of the movable object detected from the target image information, into the second model, to allow the second model to output evaluation of the moving direction of the movable object detected from the target image information.

An evaluation method according to one aspect of the present disclosure is an evaluation method performed by an arithmetic circuit accessible to a storage device storing a plurality of trained models. The plurality of trained models includes: a first model trained to, in response to input of one or plurality of pieces of whole information based on a whole of a movable object in image information and one or plurality of pieces of first part information based on one or plurality of first parts of the movable object, output evaluation of a moving direction of the movable object; and a second model trained to, in response to input of at least one of the one or plurality of pieces of whole information, at least one of the one or plurality of pieces of first part information, and one or plurality of pieces of second part information based on one or plurality of second parts of the movable object, output evaluation of the moving direction of the movable object. The one or plurality of second parts are smaller than the one or plurality of first parts. The evaluation method includes: confirming that a resolution of an image of the movable object detected from target image information is smaller than a threshold value; selecting the first model from the plurality of trained models in response to confirming that the resolution is smaller than the threshold value; and inputting the one or plurality of pieces of whole information and the one or plurality of pieces of first part information, of the movable object detected from the target image information, into the first model, to allow the first model to output evaluation of the moving direction of the movable object detected from the target image information.

An evaluation method according to one aspect of the present disclosure is an evaluation method performed by an arithmetic circuit accessible to a storage device storing a plurality of trained models. The plurality of trained models includes: a first model trained to, in response to input of one or plurality of pieces of whole information based on a whole of a movable object in image information and one or plurality of pieces of first part information based on one or plurality of first parts of the movable object, output evaluation of a moving direction of the movable object; and a second model trained to, in response to input of at least one of the one or plurality of pieces of whole information, at least one of the one or plurality of pieces of first part information, and one or plurality of pieces of second part information based on one or plurality of second parts of the movable object, output evaluation of the moving direction of the movable object. The one or plurality of second parts are smaller than the one or plurality of first parts. The evaluation method includes: confirming that a resolution of an image of the movable object detected from target image information is equal to or greater than a threshold value; selecting the second model from the plurality of trained models in response to confirming that the resolution is equal to or greater than the threshold value; and inputting at least one of the one or plurality of pieces of whole information, at least one of the one or plurality of pieces of first part information, and at least one of the one or plurality of pieces of second part information, of the movable object detected from the target image information, into the second model, to allow the second model to output evaluation of the moving direction of the movable object detected from the target image information.

A program according to one aspect of the present disclosure is a program for performing any of the above evaluation methods, by the arithmetic circuit.

An evaluation system according to one aspect of the present disclosure includes: a storage device storing a plurality of trained models; and an arithmetic circuit accessible to the storage device. The plurality of trained models includes: a simplified model trained to, in response to input of one or plurality of pieces of whole information based on a whole of a movable object in image information, output evaluation of a moving direction of the movable object; and a detailed model trained to, in response to input of at least one of the one or plurality of pieces of whole information and one or plurality of pieces of part information based on one or plurality of parts of the movable object, output evaluation of the moving direction of the movable object. The arithmetic circuit is configured to: when a resolution of an image of the movable object detected from target image information is smaller than a threshold value, select the simplified model from the plurality of trained models, and input the one or plurality of pieces of whole information of the movable object detected from the target image information, into the simplified model to allow the simplified model to output evaluation of the moving direction of the movable object detected from the target image information; and when the resolution is equal to or greater than the threshold value, select the detailed model from the plurality of trained models, and input at least one of the one or plurality of pieces of whole information as well as the one or plurality of pieces of part information, of the movable object detected from the target image information, into the detailed model, to allow the detailed model to output evaluation of the moving direction of the movable object detected from the target image information.

An evaluation system according to one aspect of the present disclosure includes: a storage device storing a plurality of trained models; and an arithmetic circuit accessible to the storage device. The plurality of trained models includes: a first model trained to, in response to input of one or plurality of pieces of whole information based on a whole of a movable object in image information and one or plurality of pieces of first part information based on one or plurality of first parts of the movable object, output evaluation of a moving direction of the movable object; and a second model trained to, in response to input of at least one of the one or plurality of pieces of whole information, at least one of the one or plurality of pieces of first part information, and one or plurality of pieces of second part information based on one or plurality of second parts of the movable object, output evaluation of the moving direction of the movable object. The one or plurality of second parts are smaller than the one or plurality of first parts. The arithmetic circuit is configured to: when a resolution of an image of the movable object detected from target image information is smaller than a threshold value, select the first model from the plurality of trained models, and input the one or plurality of pieces of whole information and the one or plurality of pieces of first part information, of the movable object detected from the target image information, into the first model, to allow the first model to output evaluation of the moving direction of the movable object detected from the target image information; and when the resolution is equal to or greater than the threshold value, select the second model from the plurality of trained models, and input at least one of the one or plurality of pieces of whole information, at least one of the one or plurality of pieces of first part information, and at least one of the one or plurality of pieces of second part information, of the movable object detected from the target image information, into the second model, to allow the second model to output evaluation of the moving direction of the movable object detected from the target image information.

### ADVANTAGEOUS EFFECTS OF INVENTION

Aspects of the present disclosure enable improvement of accuracy of evaluation of a moving direction of a movable object.

### BRIEF DESCRIPTION OF DRAWINGS

[Fig. 1] Fig. 1 is a block diagram of a configuration example of a movable device including an evaluation system according to one embodiment.
[Fig. 2] Fig. 2 is a flow chart of one example of processing performed by the evaluation system of Fig. 1.
[Fig. 3] Fig. 3 is a schematic diagram of a first example of an image in which a movable object exists.
[Fig. 4] Fig. 4 is a schematic diagram of a second example of an image in which a movable object exists.
[Fig. 5] Fig. 5 is an explanatory diagram of a positional relationship between the movable device of Fig. 1 and a movable object.
[Fig. 6] Fig. 6 is a schematic diagram of one example of an image in which a movable object at a long distance is present.
[Fig. 7] Fig. 7 is a schematic diagram of one example of an image in which a movable object at a middle distance is present.
[Fig. 8] Fig. 8 is a schematic diagram of one example of an image in which a movable object at a short distance is present.
[Fig. 9] Fig. 9 is a schematic explanatory diagram of a configuration example of a low resolution model included in the evaluation system of Fig. 1.
[Fig. 10] Fig. 10 is a schematic explanatory diagram of a configuration example of a middle resolution model included in the evaluation system of Fig. 1.
[Fig. 11] Fig. 11 is a schematic explanatory diagram of a configuration example of a high resolution model included in the evaluation system of Fig. 1.
[Fig. 12] Fig. 12 is an explanatory diagram of one example of operation of the movable device of Fig. 1.
[Fig. 13] Fig. 13 is an explanatory diagram of one example of operation of the movable device of Fig. 1.
[Fig. 14] Fig. 14 is an explanatory diagram of one example of operation of the movable device of Fig. 1.

### DESCRIPTION OF EMBODIMENTS

### [1. EMBODIMENTS]

### [1.1 CONFIGURATIONS]

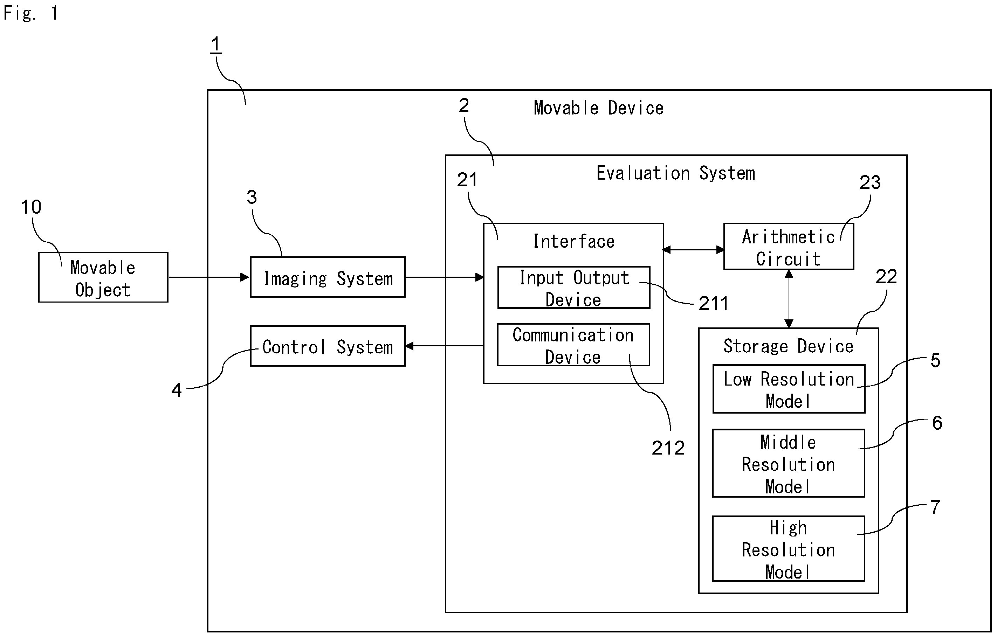

Fig. 1 is a block diagram of a configuration example of a movable device 1 according to one embodiment. The movable device 1 is an autonomous mobile robot, for example. The movable device 1 includes an evaluation system 2, an imaging system 3, and a control system 4.

The evaluation system 2 is a system for evaluation of a moving direction (moving intent) of a movable object 10. In other words, the evaluation system 2 is a system for performing moving prediction of the movable object 10. In the present embodiment, the evaluation system 2 is used for obtaining image information where the movable object 10 exists, from the imaging system 3, providing a result of evaluation of the moving direction of the movable object 10 to the control system 4, and allowing the control system 4 to perform operation corresponding to the result of evaluation of the moving direction of the movable object 10.

The movable object 10 is a visible object which may be a target for evaluation of a moving direction by the evaluation system 2. The movable object 10 is an autonomous movable object. This means that a state of the movable object 10 may include a moving state and a stop state. In the present embodiment, the movable object 10 is a person (in one example, a pedestrian). Hereinafter, in some cases a "movable object" may be replaced by a "human" but there is no intent to limit a movable object to a human. This is only for avoiding complexity of sentences to facilitate explanation. Therefore, the movable object 10 is not limited to a person by may be any of living things other than humans, such as animals. The movable object 10 may not be limited to living things but may be any of inanimate objects. Examples of inanimate objects may include: vehicles such as bicycles, automobiles, ships or air crafts; or flying objects including drones. The movable object 10 may not be limited to a whole of an object but may be a part of an object.

The imaging system 3 is a system for generating target image information. The target image information may include data of one or more images where the movable object 10 is present. The target image information may be data of a still image where the movable object 10 is present, or may be data of a video (motion, moving) image where the movable object 10 is present. In the present embodiment, the expression "the movable object 10 is present" includes that not only a whole but also at least part of the movable object 10 is present. For example, when the movable object 10 is a human, an image where a face of a human is present may mean an image where the movable object 10 is present. The imaging system 3 is communicably connected to the evaluation system 2 and thus can provide the target image information to the evaluation system 2. The imaging system 3 includes one or more cameras (digital cameras).

The control system 4 is a system equipped with a function of performing operation corresponding to a result of evaluation of the moving direction of the movable object 10. As one example, the control system 4 is available for control of movement (behavior) of the movable device 1. The control system 4 can determine movement of the movable device 1 corresponding to the result of evaluation of the moving direction of the movable object 10. The control system 4 is communicably connected to the evaluation system 2 and can receive the result of evaluation of the moving direction of the movable object 10 from the evaluation system 2. The control system 4 includes a computer system including one or more memories and one or more processors.

As shown in Fig. 1, the evaluation system 2 includes an interface 21, a storage device 22, and an arithmetic circuit 23.

The interface 21 is used for input of information to the evaluation system 2 and output of information from the evaluation system 2. The interface 21 includes an input output device 211 and a communication device 212. The input output device 211 has a function as an input device for inputting information from users, and an output device for outputting information to users. The input output device 211 includes one or more human-machine interfaces. Examples of human-machine interfaces may include input devices such as keyboards, pointing devices (mouses, trackballs), and touch pads, output devices such as displays, and loud speakers, and input and output device such as touch panels. The communication device 212 is communicably connected to external devices or systems. **In** the present embodiment, the communication device 212 is used for communication with the imaging system 3 and the control system 4 via communication networks. The communication device 212 includes one or more communication interfaces. The communication device 212 is connectable to one or more communication networks and has a function of performing communication via communication networks. The communication device 112 is in accordance with a predetermined communication protocol. The predetermined communication protocol may be selected from conventional various wired and wireless communication standards.

The storage device 22 is used for storing information used by the arithmetic circuit 23 and information generated by the arithmetic circuit 23. The storage device 22 includes one or more storage components (non-transitory storage media). The storage components may be any of hard disc drives, optical drives, and solid state drives (SSD). Further, the storage components may be any of an internal type device, an external type device, and a NAS (network-attached storage) type device.

Information stored in the storage device 22 include a plurality of trained models. The plurality of trained models include a low resolution model 5, a middle resolution model 6, and a high resolution model 7. Note that, with regard to the low resolution model 5, the middle resolution model 6 and the high resolution model 7, the terms "low", "middle", and "high" are used for the purpose of easily distinguishing these models. Fig. 1 shows that the storage device 22 stores all of the low resolution model 5, the middle resolution model 6 and the high resolution model 7. However, the low resolution model 5, the middle resolution model 6 and the high resolution model 7 may not be necessarily always stored in the storage device 22 but may be stored in the storage device 22 when required by the arithmetic circuit 23.

The low resolution model 5, the middle resolution model 6 and the high resolution model 7 are used for evaluation of the moving direction of the movable object 10. The low resolution model 5, the middle resolution model 6 and the high resolution model 7 will be described in detail below.

The arithmetic circuit 23 is a circuit for controlling operation of the evaluation system 2. The arithmetic circuit 23 is connected to the interface 21 and is accessible to the storage device 22 (i.e., accessible to the low resolution model 5, the middle resolution model 6 and the high resolution model 7). The arithmetic circuit 23 can be realized or implemented by a computer system including one or more memories and one or more processors (microprocessors). The one or more processors perform a program (stored in the one or more memories or the storage device 22) to realize or implement functions as the arithmetic circuit 23. The program herein may be stored in the storage device 22 in advance, but may be provided via a telecommunications line such as the Internet or as being stored in a non-transitory storage medium such as a memory card.

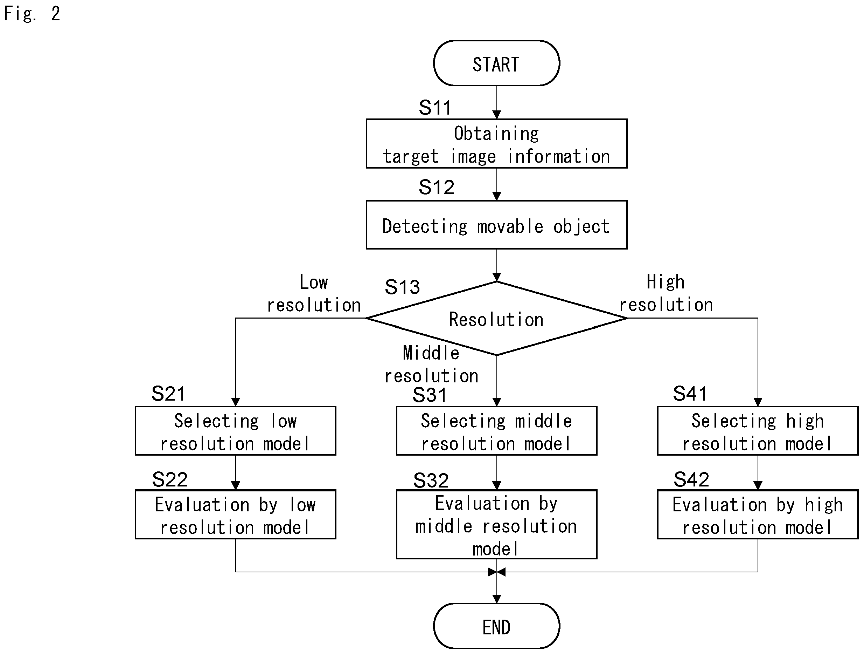

The arithmetic circuit 23 performs an evaluation method shown in Fig. 2 for evaluation of the moving direction of the movable object 10. Fig. 2 is a flow chart of one example of processing of the evaluation system of Fig. 1.

The arithmetic circuit 23 performs processing of obtaining the target image information (S11). In the present embodiment, the arithmetic circuit 23 obtains the target image information from the imaging system 3 through the interface 21.

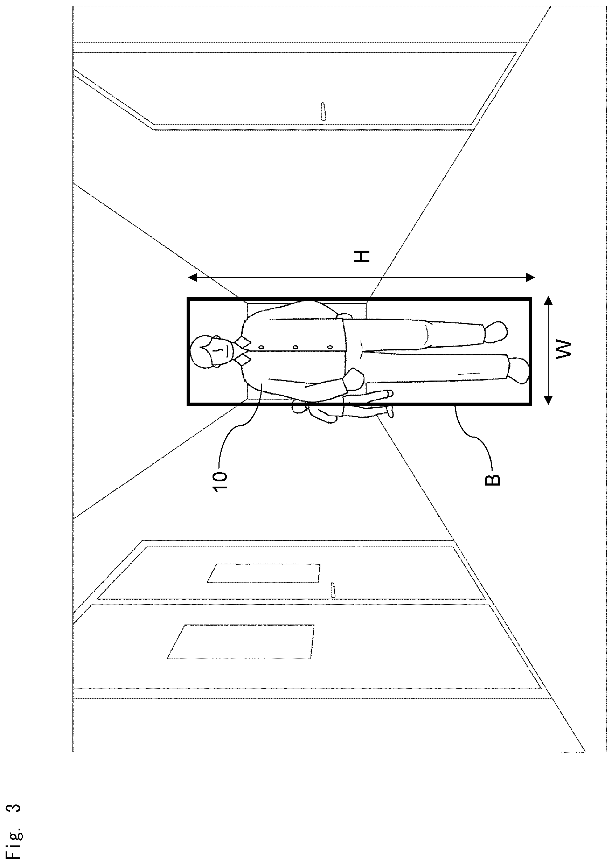

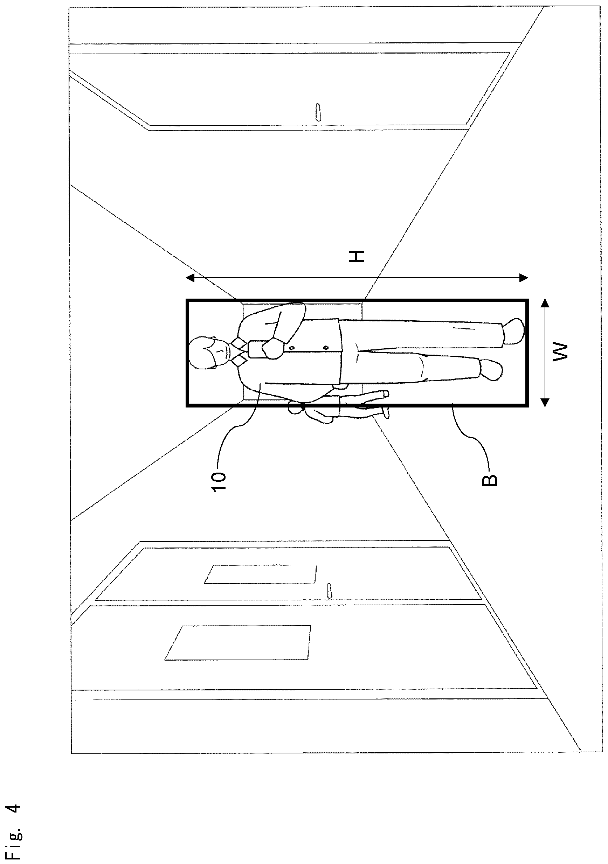

Fig. 3 is a schematic diagram of a first example of an image where the movable object 10 is present, included in the target image information. Fig. 4 is a schematic diagram of a second example of an image where the movable object 10 is present, included in the target image information. In Fig. 3 and Fig. 4, the movable object 10 moves toward a near side. In other words, the movable object 10 comes close to the movable device 1. In the image of Fig. 3, the movable object 10 walks while facing forward. In the image of Fig. 4, the movable object 10 faces downward and does not walk while facing forward.

The arithmetic circuit 23 performs processing of detecting the movable object 10 from an image included in the target image information (S12). Detecting the movable object 10 from an image may be realized by a conventional method. Detecting the movable object 10 from an image may be realized by an image processing technique such as edge detection, or may be realized by a trained model, for example. As shown in Fig. 3 and Fig. 4, in the present embodiment, the arithmetic circuit 23 extracts, from an image, a bounding box B indicative of the movable object 10. The bounding box B is a rectangular box (rectangular boundary) surrounding the movable object 10. In more detail, the bounding box B is a rectangular box having such a size to just surround the movable object 10. Therefore, a width W and a height H, of the bounding box B vary depending on a size of the movable object 10 in an image. The bounding box B may be set by a conventional technique. For example, the bounding box B may be set based on whether or not the movable object 10 is included in a rectangular interested region in an image (see JP 4447245 B), or may be set to contain a human's skeleton detected by use of a human's skeleton detecting techniques (e.g., a pose estimation model such as OpenPose).

Regarding the movable object 10 detected from an image included in the target image information, the arithmetic circuit 23 performs processing of determining a resolution of an image of the movable object 10 (S13). In the present embodiment, the arithmetic circuit 23 determines that the resolution of the image of the movable object 10 corresponds to which one of a low resolution, a middle resolution, and a high resolution.

The resolution of the image of the movable object 10 corresponds to a number of pixels used for displaying the movable object 10 in the image. The resolution of the image of the movable object 10 may vary depending on, for example, a distance from the imaging system 3 to the movable object 10, a performance (an optical resolution) of a camera of the imaging system 3, and a size of the movable object 10 in a real space. As the distance from the imaging system 3 to the movable object 10 becomes longer, the size of the movable object 10 becomes smaller in the image obtained from the imaging system 3. Thus the number of pixels of the image of the movable object 10 decreases and this may result in a decrease in the resolution of the image of the movable object 10. When the performance (the optical resolution) of the camera of the imaging system 3 is low, the resolution of the image itself obtained from the imaging system 3 is also low. Thus, the number of pixels of the image of the movable object 10 decreases and this may lead to a decrease in the resolution. When the performance (the optical resolution) of the camera of the imaging system 3 is high, the resolution of the image itself obtained from the imaging system 3 is also high. Thus, the number of pixels of the image of the movable object 10 increases and this may lead to an increase in the resolution. The resolution of the image of the movable object 10 may vary depending on the optical resolution of the camera of the imaging system 3 even when the distance from the imaging system 3 to the movable object 10 is unchanged. Examples of the size of the movable object 10 in the real space may include a human's build (e.g., a height) or a vehicle height of an automobile. As one example, in comparison of an adult being 180 cm tall and a child being 80 cm tall, the number of pixels in the child is smaller than in the adult, and the resolution of the child tends to become low.

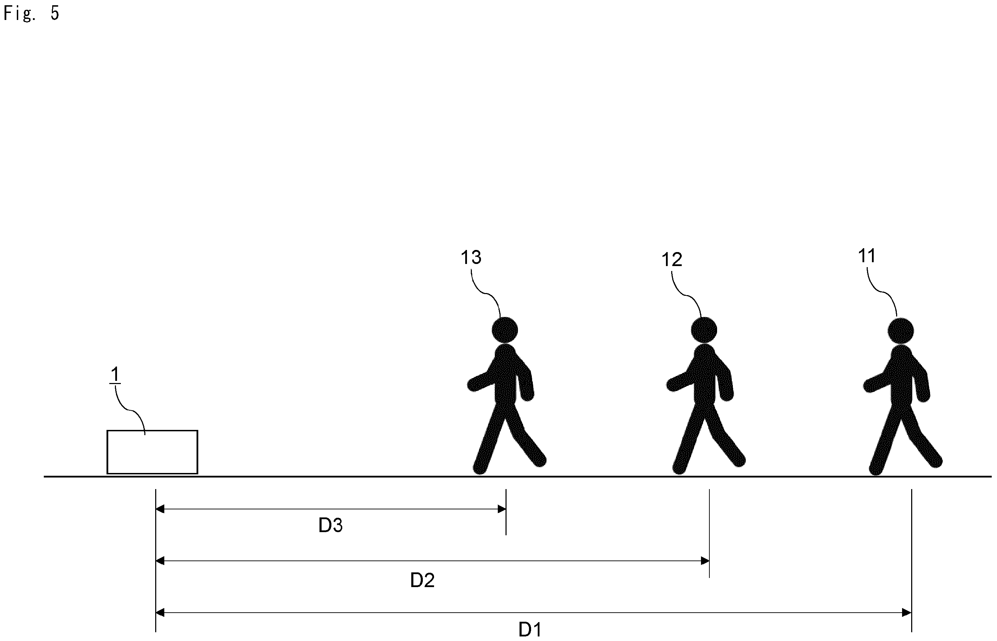

Fig. 5 is an explanatory diagram of a positional relationship between the movable device 1 (the imaging system 3) and movable objects 11, 12, and 13. In the present embodiment, the movable device 1 includes the imaging system 3 and therefore distances from the imaging system 3 to the movable objects 11, 12 and 13 are equal to distances from the movable device 1 to the movable objects 11, 12 and 13, respectively. In Fig. 5, the movable object 11 is at a long distance, the movable object 12 is at a middle distance, and the movable object 13 is at a short distance. For example, the distance D1 from the movable device 1 to the movable object 11 is 7 m, the distance D2 from the movable device 1 to the movable object 12 is 5 m, and the distance D3 from the movable device 1 to the movable object 13 is 3 m.

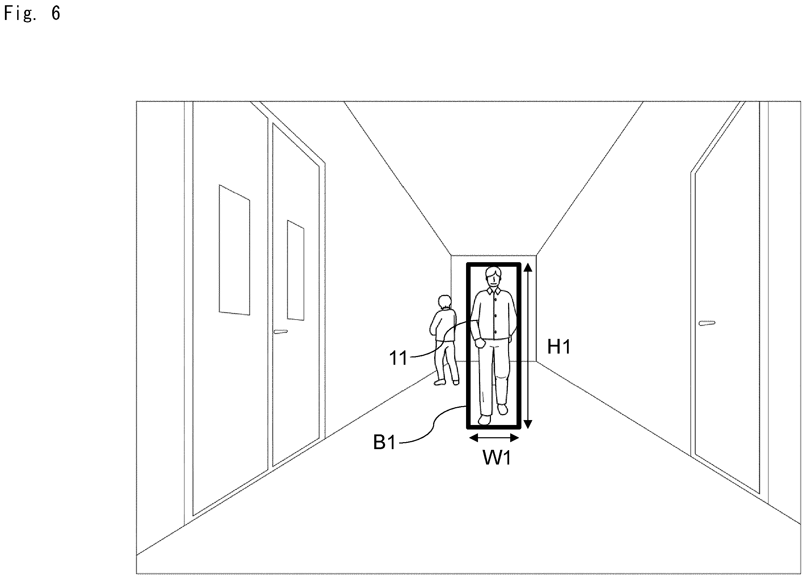

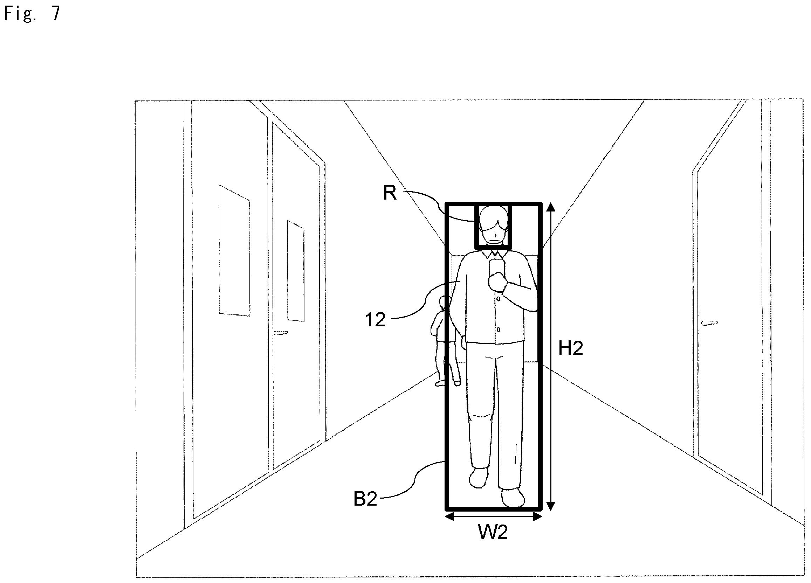

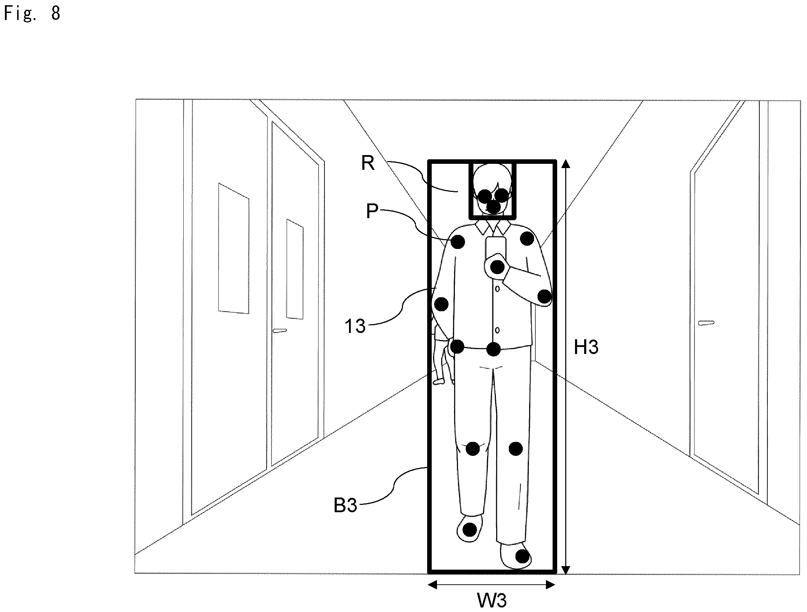

Fig. 6 is a schematic diagram of one example of an image in which the movable object 11 at a long distance is present. Fig. 7 is a schematic diagram of one example of an image in which the movable object 12 at a middle distance is present. Fig. 8 is a schematic diagram of one example of an image in which the movable object 13 at a short distance is present.

Among a bounding box B1 of the movable object 11 of Fig. 6, a bounding box B2 of the movable object 12 of Fig. 7, and a bounding box B3 of the movable object 13 of Fig. 8, the bounding box B1 has the smallest area and the bounding box B3 has the largest area. The areas of the bounding boxes B1, B2 and B3 are defined by sizes of the bounding boxes B1, B2 and B3 relative to the image. As shown in Fig. 6, Fig. 7, and Fig. 8, the areas of the bounding boxes B1, B2 and B3 are represented by the products of the numbers of pixels corresponding to widths W1, W2 and W3 of the bounding boxes B1, B2 and B3 and the numbers of pixels corresponding to heights H1, H2 and H3 of the bounding boxes B1, B2 and B3 in the images.

The number of pixels constituting the bounding box is directly proportional to the area of the bounding box. The area of the bounding box being large means the resolution of the image of the movable object 10 being high. The area of the bounding box being small means the resolution of the image of the movable object 10 being low. In Fig. 6, Fig. 7 and Fig. 8, the resolution of the image of the movable object 11 is the lowest, the resolution of the image of the movable object 13 is the highest, and the resolution of the movable object 12 is between the resolution of the image of the movable object 11 and the resolution of the image of the movable object 13.

As apparent from Fig. 6, Fig. 7 and Fig. 8, as the movable object 13 is at a shorter distance, a region occupied by the movable object 13 in the image becomes larger. An increase in the region occupied by the movable object 13 in the image causes an increase in the number of pixels constituting the image of the movable object 13 and thus the resolution of the movable object 13 increases. As apparent from Fig. 6, Fig. 7 and Fig. 8, as the movable object 13 is at a longer distance, a region occupied by the movable object 13 in the image becomes smaller. A decrease in the region occupied by the movable object 13 in the image causes a decrease in the number of pixels constituting the image of the movable object 13 and thus the resolution of the movable object 13 decreases. In summary, as the distance from the imaging system 3 to the movable object 10 becomes further and further, the resolution of the image of the movable object 10 becomes lower. As the distance from the imaging system 3 to the movable object 10 becomes closer and closer, the resolution of the image of the movable object 10 becomes higher.

In the present embodiment, the arithmetic circuit 23 determines the resolution of the image of the movable object 10 based on the area of the bounding box of the movable object 10. As one example, the arithmetic circuit 23 may adopt the area of the bounding box of the movable object 10 as the resolution of the image of the movable object 10. The arithmetic circuit 23 compares the area of the bounding box of the movable object 10 with a threshold value to determine the resolution of the image of the movable object 10. For example, the arithmetic circuit 23 may determine that the resolution of the image of the movable object 10 is the low resolution, when the area of the bounding box is smaller than a first threshold value. **In** the present embodiment, the arithmetic circuit 23 may determine that the resolution of the image of the movable object 10 is the middle resolution, when the area of the bounding box is equal to or larger than the first threshold value and is smaller than a second threshold value. The arithmetic circuit 23 may determine that the resolution of the image of the movable object 10 is the high resolution, when the area of the bounding box is larger than the second threshold value.

The first threshold value is a threshold value for distinguishing the low resolution and the middle resolution from each other. For example, when the number of pixels of the image is represented by 360 × 270, the resolution of the image of the movable object 10 may be considered to be the low resolution when the number of pixels of the bounding box is smaller than 30 × 90. **In** this case, the first threshold value is 2700. The second threshold value is a threshold value for distinguishing the middle resolution and the high resolution from each other. For example, when the number of pixels of the image is represented by 360 × 270, the resolution of the image of the movable object 10 may be considered to be the high resolution when the number of pixels of the bounding box is larger than 60 × 180. **In** this case, the second threshold value is 10800.

When the target image information includes a plurality of images, a representative value of the bounding boxes of the movable objects 10 individually present in the plurality of images may be compared with a threshold value (the first threshold value, the second threshold value). Examples of the representative value may include an average, a minimum value, a maximum value, a median, and a mode. Accordingly, it is possible to decrease a probability that determination that the resolution of the image of the movable object 10 corresponds to which one of the low resolution, the middle resolution and the high resolution changes in short time due to a change in the bounding box over the plurality of images.

By comparing the movable objects 11 to 13 of Fig. 6 to Fig. 8, regarding the image of the movable object 11 of Fig. 6, a whole of the movable object 11 is relatively clear but a part, such as, a head, of the movable object 11 is relatively unclear. For example, in Fig. 6, it is difficult to determine a direction of a face of the movable object 11 at high accuracy. Regarding the image of the movable object 12 of Fig. 7, a whole of the movable object 12 is relatively clear and a part, such as a head R, of the movable object 11 is also relatively clear. However, a part smaller than the head, such as, an eye or a skeleton point, of the movable object 11 is relatively unclear. For example, in Fig. 7, it is difficult to determine a line of sight of the movable object 11 or a pose of the movable object 11 at high accuracy. Regarding the image of the movable object 13 of Fig. 8, a whole of the movable object 13 is relatively clear and a part (first part), such as a head R, of the movable object 13 is also relatively clear. Further, a part (second part) smaller than the head, such as, an eye or a skeleton point P, of the movable object 11 is also relatively clear. Therefore, for the movable object 13 of Fig. 8, it is possible to determine a line of sight of the movable object 11 or a pose of the movable object 11 at high accuracy.

As the resolution of the image of the movable object 10 becomes lower, accuracy of information obtained from not a whole but a part of the movable object 10 tends to be lower. And, using information with low accuracy may cause a decrease in accuracy of the evaluation of the moving direction of the movable object 10.

From this point of view, the evaluation system 2 includes a plurality of trained models (the low resolution model 5, the middle resolution model 6 and the high resolution model 7) corresponding to resolutions of the image of the movable object 10. The arithmetic circuit 23 is configured to select a trained model used for evaluation of the moving direction of the movable object 10, from the plurality of trained models (the low resolution model 5, the middle resolution model 6 and the high resolution model 7), in accordance with the resolution of the image of the movable object 10.

In more detail, the arithmetic circuit 23 confirms that the resolution of the image of the movable object 10 detected from the target image information is smaller than the first threshold value, and selects the low resolution model 5 from the plurality of trained models in response to confirming that the resolution is smaller than the first threshold value. The arithmetic circuit 23 confirms that the resolution of the image of the movable object 10 detected from the target image information is equal to or greater than the first threshold value, and selects the middle resolution model 6 or the high resolution model 7 from the plurality of trained models in response to confirming that the resolution is equal to or greater than the first threshold value. **In** this case, the arithmetic circuit 23 confirms that the resolution of the image of the movable object 10 detected from the target image information is smaller than the second threshold value, and selects the middle resolution model 6 from the plurality of trained models (the middle resolution model 6 and the high resolution model 7) in response to confirming that the resolution is smaller than the second threshold value. While, the arithmetic circuit 23 confirms that the resolution of the image of the movable object 10 detected from the target image information is equal to or greater than the second threshold value, and selects the high resolution model 7 from the plurality of trained models (the middle resolution model 6 and the high resolution model 7) in response to confirming that the resolution is equal to or greater than the second threshold value.

As shown in Fig. 2, when the resolution of the image of the movable object 10 is the low resolution (S13; the low resolution), the arithmetic circuit 23 selects the low resolution model 5 (S21).

The low resolution model 5 is used when the resolution of the image of the movable object 10 is the low resolution. The low resolution model 5 is a simplified model which is trained to, in response to input of one or plurality of pieces of whole information based on a whole of the movable object 10 in the image information, output the evaluation of the moving direction of the movable object 10.

One or more pieces of whole information include at least one of a position or location of the movable object 10, a speed or velocity of the movable object 10, or an image of a whole of the movable object 10. The position or location of the movable object 10 is an absolute position or location of the movable object 10 in the real space or a position or location (relative position or location) of the movable object 10 relative to the movable device 1 in the real space, for example. The speed of the movable object 10 is an absolute speed of the movable object 10 or a speed (relative speed) of the movable object 10 relative to the movable device 1, for example. The image of the whole of the movable object 10 is an image surrounded by the bounding box corresponding to the movable object 10, for example.

In the present embodiment, the evaluation of the moving direction of the movable object 10 includes a probability that the moving direction of the movable object 10 is a first moving direction and a probability that the moving direction of the movable object 10 is a second moving direction. The first moving direction is a direction in which the movable object 10 moves toward a target object. The second moving direction is a direction in which the movable object 10 avoids the target object. In the present embodiment, the target object is, for example, the movable device 1. This means that the evaluation of the moving direction of the movable object 10 indicates a probability of whether the movable object 10 has intention to avoid the movable device 1. From this point of view, the evaluation of the moving direction of the movable object 10 is an avoidance intention score indicative of a probability of intention of the movable object to avoid the movable device 1. Thus, the evaluation system 2 is considered to perform avoidance intention prediction of a pedestrian in front based on a configuration resolution of a human region image by use of a trained model.

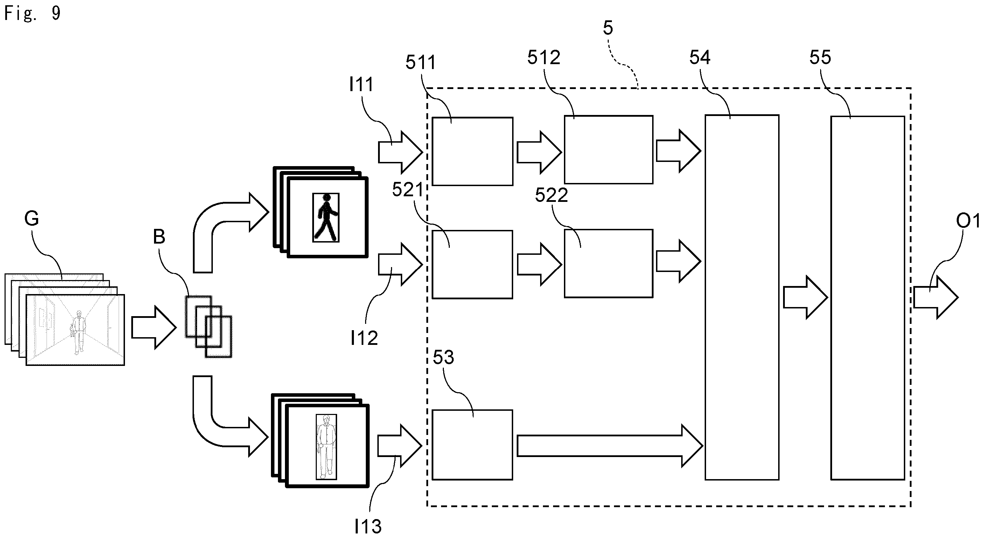

Fig. 9 is a schematic explanatory diagram of a configuration example of the low resolution model 5. In Fig. 9, the target image information includes a plurality of images G arranged in chronological order. From the plurality of images G, the bounding boxes B of the movable objects 10 are detected. From each bounding box B, a plurality of pieces of whole information I11, I12, and I13 are obtained. Accordingly, it is possible to obtain time-series pieces of the whole information I11, time-series pieces of the whole information I12, and time-series pieces of the whole information I13. In Fig. 9, the whole information I11 is a position or location of the movable object 10, the whole information I12 is a speed of the movable object 10, and the whole information I13 is an image of a whole of the movable object 10.

The low resolution model 5 of Fig. 9 is configured to, in response to input of pieces of the whole information I11, I12 and I13, output the evaluation O1 of the moving direction of the movable object 10. The low resolution model 5 of Fig. 9 includes a first network mechanism 511, a first attention mechanism 512, a second network mechanism 521, a second attention mechanism 522, a third network mechanism 53, a connecting part 54, and an output part 55.

The first network mechanism 511 extracts one or more features from the time-series pieces of the whole information I11. The first network mechanism 511 includes an architecture of a recurrent neural network (RNN) such as a long short-term memory (LSTM) or a gated recurrent unit (GRU), for example. The first attention mechanism 512 includes a temporal attention mechanism which determines that which piece of the whole information I11 of the time-series pieces of the whole information I11 should be focused. Accordingly, one or more features of a piece of the whole information I11 which is considered the most important of the time-series pieces of the whole information I11 are extracted and then input into the connecting part 54.

The second network mechanism 521 extracts one or more features from the time-series pieces of the whole information I12. The second network mechanism 521 includes an architecture of a recurrent neural network (RNN) such as a long short-term memory (LSTM) or a gated recurrent unit (GRU), for example. The second attention mechanism 522 includes a temporal attention mechanism which determines that which piece of the whole information I12 of the time-series pieces of the whole information I12 should be focused. Accordingly, one or more features of a piece of the whole information I12 which is considered the most important of the time-series pieces of the whole information I12 are extracted and then input into the connecting part 54.

The third network mechanism 53 extracts one or more features from the time-series pieces of the whole information I13. As described above, the whole information I13 is an image of a whole of the movable object 10. The third network mechanism 53 includes an architecture of a combination of a 3D-convolutional neural network (3DCNN) or a convolutional neural network (CNN) and a recurrent neural network (RNN), for example. Accordingly, one or more features are extracted from the time-series pieces of the whole information I13 and then input into the connecting part 54.

The connecting part 54 inputs features of the pieces of the whole information I11, I12, and I13 collectively into the output part 55. In the case of Fig. 9, the connecting part 54 inputs one or more features of a piece of the whole information I11 considered the most important of the time-series pieces of the whole information I11 from the first attention mechanism 512, one or more features of a piece of the whole information I12 considered the most important of the time-series pieces of the whole information I12 from the second attention mechanism 522, and one or more features from the time-series pieces of the whole information I13 from the third network mechanism 53, into the output part 55.

The output part 55 outputs the evaluation O1 of the moving direction of the movable object 10 from features from the connecting part 54. The output part 55 includes a fully-connected layer, for example. The fully-connected layer includes a softmax function, for example.

As shown in Fig. 2, when the resolution of the image of the movable object 10 detected from the target image information is the low resolution (S13; the low resolution), the arithmetic circuit 23 selects the simplified model (the low resolution model 5) from the plurality of trained models (S21) and performs evaluation by the low resolution model 5 (S22). In more detail, the arithmetic circuit 23 inputs pieces of the whole information I11, I12, and I13 of the movable object 10 detected from the target image information, into the low resolution model 5 to allow the low resolution model 5 to output the evaluation O1 of the moving direction of the movable object 10 detected from the target image information. Thus, the evaluation system 2 performs the evaluation of the moving direction of the movable object 10 without using information (part information described below) which is more likely to have lower accuracy in the case of the low resolution. As a result, the evaluation system 2 enables improvement of accuracy of the evaluation of the moving direction of the movable object 10.

When the resolution of the image of the movable object 10 is the middle resolution (S13; the middle resolution), the arithmetic circuit 23 selects the middle resolution model 6 (S31). As shown in Fig. 2, when the resolution of the image of the movable object 10 is the high resolution (S13; the high resolution), the arithmetic circuit 23 selects the high resolution model 7 (S41).

Each of the middle resolution model 6 and the high resolution model 7 is used when the resolution of the image of the movable object 10 is the middle resolution. The middle resolution model 6 is a detailed model trained to, in response to input of at least one of the one or plurality of pieces of whole information based on a whole of the movable object 10 in the image information and one or plurality of pieces of part information based on one or plurality of parts of the movable object 10 in the image information, output the evaluation of the moving direction of the movable object 10.

The one or plurality of pieces of the part information include at least one of: one or more positions or locations of the one or plurality of parts of the movable object 10; one or more directions of the one or plurality of parts of the movable object 10; one or more images of the one or plurality of parts of the movable object 10; or information based on one or more relationships among the plurality of parts of the movable object 10, for example. Examples of the one or more positions or locations of the one or plurality of parts include a position or location of a face of the movable object 10. Examples of the one or more directions of the one or plurality of parts include a direction of a face of the movable object and a line of sight of the movable object. Examples of the one or more images of the one or plurality of parts include an image of a face of the movable object. Examples of the information based on one or more relationships among the plurality of parts include information on a pose of the movable object.

The one or plurality of parts of the movable object 10 may be classified into a first part and a second part smaller than the first part. The first part is a part of a body of the movable object 10, for example, the face R shown in Fig. 7. The first part may not be limited to a face, but may be a head, an arm, a torso, a leg, or the like. The second part is a part smaller than the part of the body of the movable object 10. In comparison with the first part, the second part can be considered as a point in the movable object 10. Examples of the second part may include, for example, the skeleton point P shown in Fig. 8. The second part may not be limited to a skeleton point, but may be an eye, a nose, a finger, a joint, or the like.

From this point, the part information may be classified into first part information based on the first part and second part information based on the second part. To obtain the second part information at more accuracy, it is necessary that the resolution of the image of the movable object 10 is higher than that for the first part information.

In the present embodiment, the middle resolution model 6 uses the first part information in addition to the whole information. This means that the middle resolution model 6 is a first model trained to, in response to input of one or plurality of pieces of the whole information based on the whole of the movable object 10 in the image information and one or plurality of pieces of the first part information based on one or plurality of the first parts of the movable object 10, output the evaluation of the moving direction of the movable object 10.

In the present embodiment, the high resolution model 7 uses the second part information in addition to the whole information and the first part information. This means that the high resolution model 7 is a second model trained to, in response to input of at least one of the one or plurality of pieces of the whole information based on the whole of the movable object 10 in the image information, at least one of the one or plurality of pieces of the first part information, and one or plurality of pieces of the second part information, output the evaluation of the moving direction of the movable object 10.

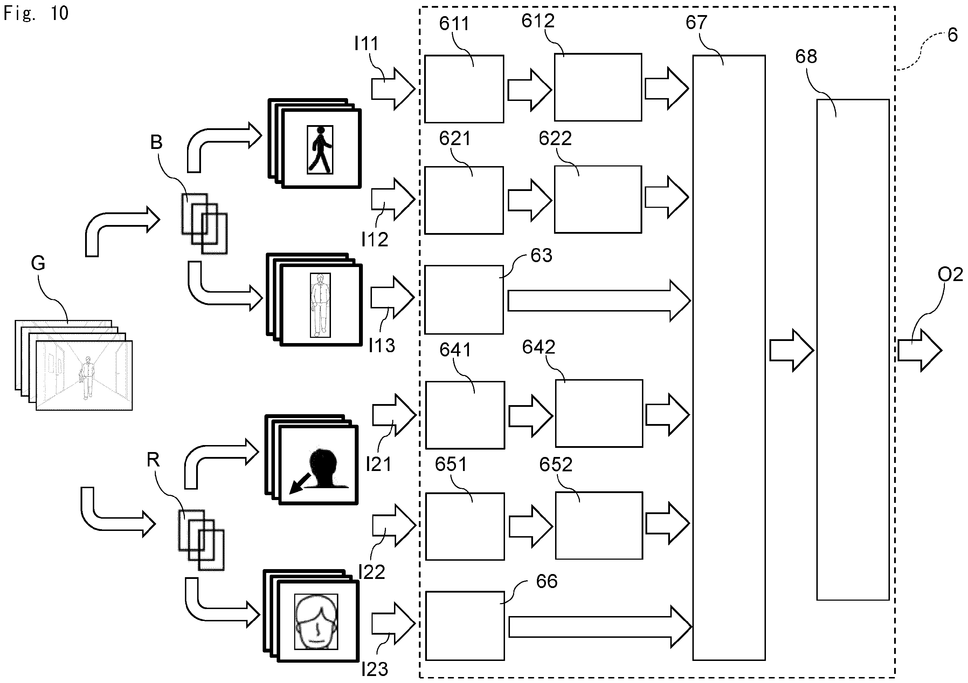

Fig. 10 is a schematic explanatory diagram of a configuration example of the middle resolution model 6. In Fig. 10, the target image information includes a plurality of images G arranged in chronological order. From the plurality of images G, the bounding boxes B of the movable object 10 are detected. From each bounding box B, a plurality of pieces of whole information I11, I12, and I13 are obtained. Accordingly, it is possible to obtain time-series pieces of the whole information I11, time-series pieces of the whole information I12, and time-series pieces of the whole information I13. In Fig. 10, the whole information I11 is a position or location of the movable object 10, the whole information I12 is a speed of the movable object 10, and the whole information I13 is an image of a whole of the movable object 10.

In Fig. 10, from the plurality of images G, bounding boxes R of a face of the movable object 10 are detected. From each bounding box R, a plurality of pieces of first part information I21, I22, and I23 are obtained. Accordingly, it is possible to obtain time-series pieces of the first part information I21, time-series pieces of the first part information I22, and time-series pieces of the first part information I23. In Fig. 10, the first part information I21 is a position or location of the face of the movable object 10, the first part information I22 is a direction of the face of the movable object 10, and the first part information I23 is an image of the face of the movable object 10.

The middle resolution model 6 of Fig. 10 is configured to, in response to input of the pieces of the whole information I11, I12, and I13 and the pieces of the part information I21, I22 and I23, output evaluation O2 of the moving direction of the movable object 10. The middle resolution model 6 of Fig. 10 includes a first network mechanism 611, a first attention mechanism 612, a second network mechanism 621, a second attention mechanism 622, a third network mechanism 63, a fourth network mechanism 641, a fourth attention mechanism 642, a fifth network mechanism 651, a fifth attention mechanism 652, a sixth network mechanism 66, a connecting part 67, and an output part 68.

The first network mechanism 611, the first attention mechanism 612, the second network mechanism 621, the second attention mechanism 622 and the third network mechanism 63 are the same as the first network mechanism 511, the first attention mechanism 512, the second network mechanism 521, the second attention mechanism 522 and the third network mechanism 53, of the low resolution model 5 of Fig. 9.

The fourth network mechanism 641 extracts one or more features from the time-series pieces of the first part information I21. The fourth network mechanism 641 includes an architecture of a recurrent neural network (RNN) such as a long short-term memory (LSTM) or a gated recurrent unit (GRU), for example. The fourth attention mechanism 642 includes a temporal attention mechanism which determines that which piece of the first part information I21 of the time-series pieces of the first part information I21 should be focused. Accordingly, one or more features of a piece of the first part information I21 which is considered the most important of the time-series pieces of the first part information I21 are extracted and then input into the connecting part 67.

The fifth network mechanism 651 extracts one or more features from the time-series pieces of the first part information I22. The fifth network mechanism 651 includes an architecture of a recurrent neural network (RNN) such as a long short-term memory (LSTM) or a gated recurrent unit (GRU), for example. The fifth attention mechanism 652 includes a temporal attention mechanism which determines that which piece of the first part information I22 of the time-series pieces of the first part information I22 should be focused. Accordingly, one or more features of a piece of the first part information I22 which is considered the most important of the time-series pieces of the first part information I22 are extracted and then input into the connecting part 67.

The sixth network mechanism 66 extracts one or more features from the time-series pieces of the first part information I23. As described above, the first part information I23 is an image of the face (first part) of the movable object 10. The sixth network mechanism 66 includes an architecture of a combination of a 3D-convolutional neural network (3DCNN) or a convolutional neural network (CNN) and a recurrent neural network (RNN), for example. Accordingly, one or more features are extracted from the time-series pieces of the first part information I23 and then input into the connecting part 67.

The connecting part 67 inputs features of the pieces of the whole information I11, I12, and I13 and features of the pieces of the part information (first part information) I21, I22, and I23 collectively into the output part 68. In the case of Fig. 10, the connecting part 67 inputs: one or more features of a piece of the whole information I11 considered the most important of the time-series pieces of the whole information I11 from the first attention mechanism 612; one or more features of a piece of the whole information I12 considered the most important of the time-series pieces of the whole information I12 from the second attention mechanism 622; one or more features from the time-series pieces of the whole information I13 from the third network mechanism 63; one or more features of a piece of the first part information I21 considered the most important of the time-series pieces of the first part information I21 from the fourth attention mechanism 642; one or more features of a piece of the first part information I22 considered the most important of the time-series pieces of the first part information I22 from the fifth attention mechanism 652; and one or more features from the time-series pieces of the first part information I23 from the sixth network mechanism 66, into the output part 68.

The output part 68 outputs the evaluation O2 of the moving direction of the movable object 10 from features from the connecting part 67. The output part 68 includes a fully-connected layer, for example. The fully-connected layer includes a softmax function, for example.

As shown in Fig. 2, when the resolution of the image of the movable object 10 detected from the target image information is the middle resolution (S13; the middle resolution), the arithmetic circuit 23 selects the middle resolution model 6 (the detailed model, the first model) from the plurality of trained models (S31) and performs evaluation by the middle resolution model 6 (S32). In more detail, the arithmetic circuit 23 inputs pieces of the whole information I11, I12, and I13 and pieces of the part information (first part information) I21, I22, and I23, of the movable object 10 detected from the target image information, into the middle resolution model 6 to allow the middle resolution model 6 to output the evaluation O2 of the moving direction of the movable object 10 detected from the target image information. Thus, the evaluation system 2 performs the evaluation of the moving direction of the movable object 10 without using information (second part information) which is more likely to have lower accuracy in the case of the middle resolution. As a result, the evaluation system 2 enables improvement of accuracy of the evaluation of the moving direction of the movable object 10.

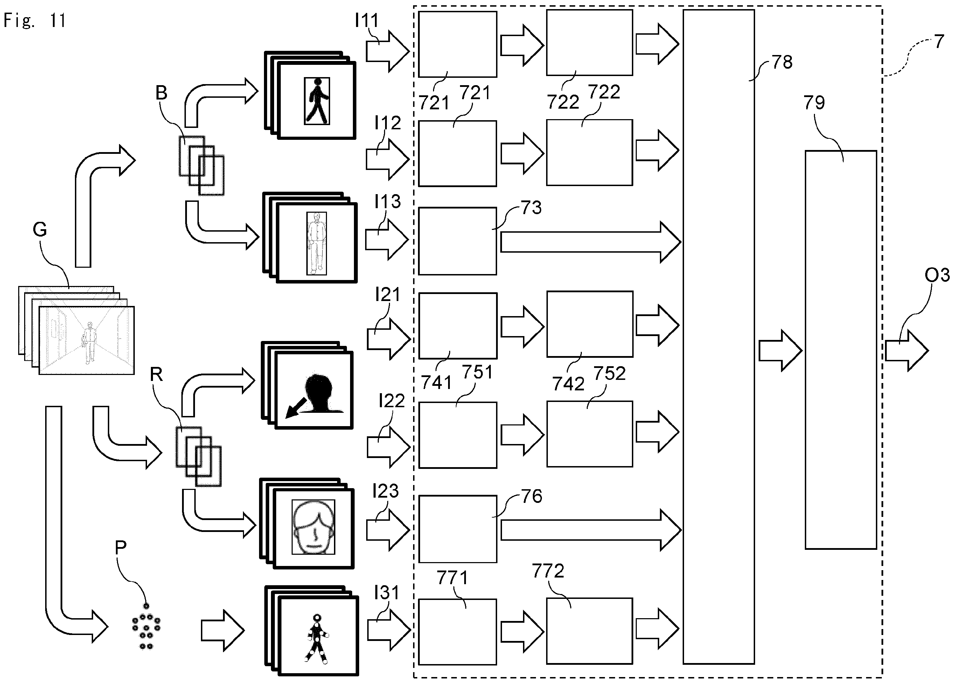

Fig. 11 is a schematic explanatory diagram of a configuration example of the high resolution model 7. In Fig. 11, the target image information includes a plurality of images G arranged in chronological order. From the plurality of images G, the bounding boxes B of the movable objects 10 are detected. From each bounding box B, a plurality of pieces of whole information I11, I12, and I13 are obtained. Accordingly, it is possible to obtain time-series pieces of the whole information I11, time-series pieces of the whole information I12, and time-series pieces of the whole information I13. In Fig. 11, the whole information I11 is a position or location of the movable object 10, the whole information I12 is a speed of the movable object 10, and the whole information I13 is an image of a whole of the movable object 10.

In Fig. 11, from the plurality of images G, the bounding boxes R of the face (first part) of the movable object 10 are detected. From each bounding box R, a plurality of pieces of first part information I21, I22, and I23 are obtained. Accordingly, it is possible to obtain time-series pieces of the first part information I21, time-series pieces of the first part information I22, and time-series pieces of the first part information I23. In Fig. 11, the first part information I21 is a position or location of the face of the movable object 10, the first part information I22 is a direction of the face of the movable object 10, and the first part information I23 is an image of the face of the movable object 10.

In Fig. 11, from the plurality of images G, a plurality of skeleton points (second parts) P of the movable object 10 are detected. From a relationship among the plurality of skeleton points P, second part information I31 is obtained. Accordingly, it is possible to obtain time-series pieces of the second part information I31. In Fig. 11, the second part information I31 is information on a pose of the movable object 10, for example. In some examples, the second part information may include information of the skeleton points, positions or locations of the skeleton points, and adjacent information on the skeleton points.

The high resolution model 7 of Fig. 11 is configured to, in response to input of the pieces of the whole information I11, I12, and I13, the pieces of the first part informationI21, I22, and I23, and the second part information I31, output evaluation O3 of the moving direction of the movable object 10. The high resolution model 7 of Fig. 11 includes a first network mechanism 711, a first attention mechanism 712, a second network mechanism 721, a second attention mechanism 722, a third network mechanism 73, a fourth network mechanism 741, a fourth attention mechanism 742, a fifth network mechanism 751, a fifth attention mechanism 752, a sixth network mechanism 76, a seventh network mechanism 771, a seventh attention mechanism 772, a connecting part 78, and an output part 79.

The first network mechanism 711, the first attention mechanism 712, the second network mechanism 721, the second attention mechanism 722, and the third network mechanism 73 are the same as the first network mechanism 511, the first attention mechanism 512, the second network mechanism 521, the second attention mechanism 522, and the third network mechanism 53, of the low resolution model 5 of Fig. 9.

The fourth network mechanism 741, the fourth attention mechanism 742, the fifth network mechanism 751, the fifth attention mechanism 752, and the sixth network mechanism 76 are the same as the fourth network mechanism 641, the fourth attention mechanism 642, the fifth network mechanism 651, the fifth attention mechanism 652, and the sixth network mechanism 66, of the middle resolution model 6 of Fig. 10.

The seventh network mechanism 771 extracts one or more features from the time-series pieces of the second part information I31. The seventh network mechanism 771 includes an architecture of a recurrent neural network (RNN) such as a long short-term memory (LSTM) or a gated recurrent unit (GRU), for example. The seventh attention mechanism 772 includes a temporal attention mechanism which determines that which piece of the second part information I31 of the time-series pieces of the second part information I31 should be focused. Accordingly, one or more features of a piece of the second part information I31 which is considered the most important of the time-series pieces of the second part information I31 are extracted and then input into the connecting part 78.

The connecting part 78 inputs features of the pieces of the whole information I11, I12, and I13, features of the pieces of the part information (first part information) I21, I22, and I23, and features of the part information (second part information) I31 collectively into the output part 79. In the case of Fig. 11, the connecting part 78 inputs: one or more features of a piece of the whole information I11 considered the most important of the time-series pieces of the whole information I11 from the first attention mechanism 712; one or more features of a piece of the whole information I12 considered the most important of the time-series pieces of the whole information I12 from the second attention mechanism 722; one or more features from the time-series pieces of the whole information I13 from the third network mechanism 73; one or more features of a piece of the first part information I21 considered the most important of the time-series pieces of the first part information I21 from the fourth attention mechanism 742; one or more features of a piece of the first part information I22 considered the most important of the time-series pieces of the first part information I22 from the fifth attention mechanism 752; one or more features from the time-series pieces of the first part information I23 from the sixth network mechanism 76; and one or more features of a piece of the second part information I31 considered the most important of the time-series pieces of the second part information I31 from the seventh attention mechanism 772, into the output part 79.

The output part 79 outputs the evaluation O3 of the moving direction of the movable object 10 from features from the connecting part 78. The output part 79 includes a fully-connected layer, for example. The fully-connected layer includes a softmax function, for example.

As shown in Fig. 2, when the resolution of the image of the movable object 10 detected from the target image information is the high resolution (S13; the high resolution), the arithmetic circuit 23 selects the high resolution model 7 (the detailed model, the second model) from the plurality of trained models (S41) and performs evaluation by the high resolution model 7 (S42). In more detail, the arithmetic circuit 23 inputs the pieces of the whole information I11, I12, and I13, the pieces of the part information (the first part information) I21, I22, and I23, and the part information (the second part information) I31, of the movable object 10 detected from the target image information, into the high resolution model 7 to allow the high resolution model 7 to output the evaluation O3 of the moving direction of the movable object 10 detected from the target image information. Accordingly, in the case of the high resolution, the evaluation system 2 increases amount of information relative to the middle resolution to perform the evaluation of the moving direction of the movable object 10. As a result, the evaluation system 2 enables improvement of accuracy of the evaluation of the moving direction of the movable object 10.

The result of the evaluation of the moving direction of the movable object 10 by the aforementioned evaluation system 2 is used in determining the operation of the movable device 1 at the control system 4 of the movable device 1.

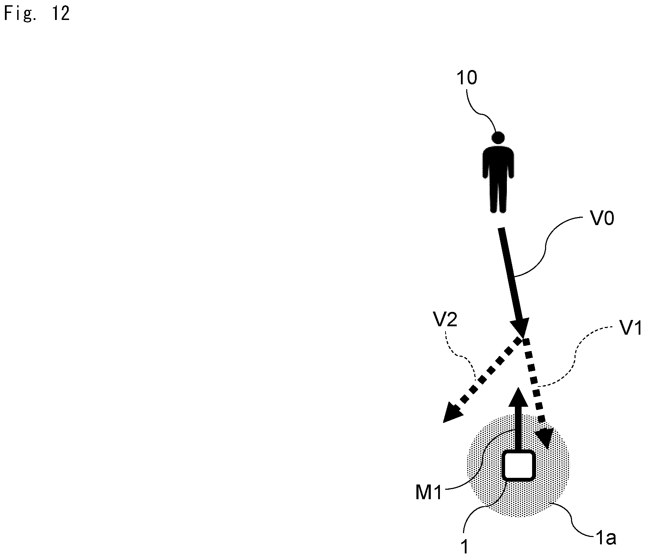

Fig. 12 to Fig. 14 are explanatory diagrams of examples of the operation of the movable device 1. In Fig. 12, the movable object 10 exists on a course M1 of the movable device 1. The movable object 10 is moving in a moving direction V0. In Fig. 12, the moving direction V0 is represented by a relative velocity vector of the movable object 10 relative to the movable device 1.

In the movable device 1, the evaluation system 2 performs the evaluation of the moving direction of the movable object 10. The evaluation of the moving direction of the movable object 10 includes a probability that the moving direction of the movable object 10 is a first moving direction V1 and a probability that the moving direction of the movable object 10 is a second moving direction V2. The first moving direction V1 is a direction in which the movable object 10 moves toward a target object (the movable device 1). The second moving direction V2 is a direction in which the movable object 10 avoids the target object (the movable device 1).

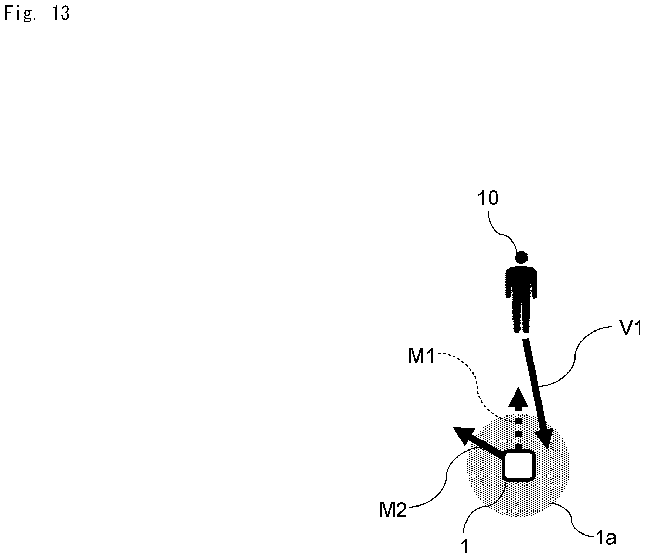

When the probability that the moving direction of the movable object 10 is the first moving direction V1 is high, there is a high probability that the movable object 10 arrives at an adjacent area 1a of the movable device 1 to clash the movable device 1. In this case, as shown in Fig. 13, in the movable device 1, the control system 4 can take an action to avoid a clash with the movable object 10 by changing the course M1 of the movable device 1 to a course M2.

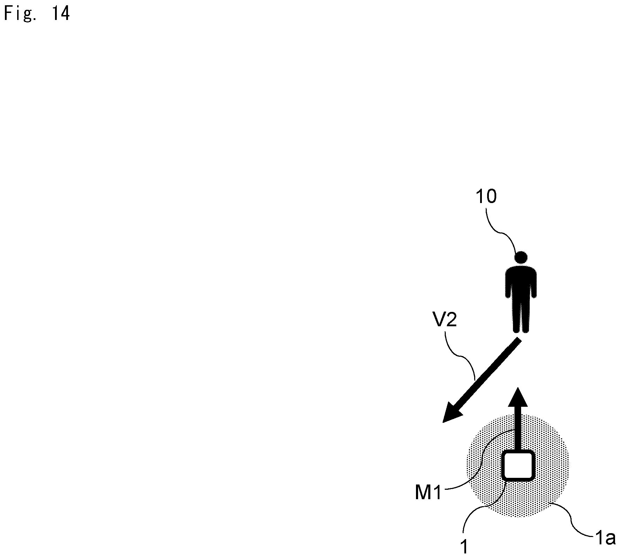

When the probability that the moving direction of the movable object 10 is the second moving direction V2 is high, there is a low probability that the movable object 10 clashes the movable device 1. In this case, as shown in Fig. 14, in the movable device 1, the control system 4 takes an action to keep the course M1 of the movable device 1.

As described above, in the movable device 1, the control system 4 controls the action or behavior of the movable device 1 based on the evaluation of the moving direction of the movable object 10 obtained from the evaluation system 2, and thereby it is possible to reduce a probability of a crash between the movable device 1 and the movable object 10. In particular, the movable device 1 can set its course by not a moving policy of simply prioritizing a movement of the movable object 10 to avoid thoroughly a crash with the movable object 10 but a moving policy of considering mutual concessions in consideration of whether the movable object 10 takes an action to avoid a crash with the movable device 1. Therefore, the movable device 1 can realize smoothly passing by the movable object 10.

### [1.2 ADVANTAGEOUS EFFECTS]

The aforementioned evaluation method is performed by the arithmetic circuit 23 accessible to the storage device 22 storing a plurality of trained models. The plurality of trained models includes: the simplified model (the low resolution model 5) trained to, in response to input of one or plurality of pieces of whole information I11 to I13 based on a whole (the bounding box B, B1 to B3) of the movable object 10 to 13 in image information, output evaluation of the moving direction of the movable object 10; and the detailed model (the middle resolution model 6, the high resolution model 7) trained to, in response to input of at least one of the one or plurality of pieces of whole information I11 to I13 and one or plurality of pieces of part information I21 to I23, I31 based on one or plurality of parts R, P of the movable object 10, output evaluation of the moving direction of the movable object 10.

Herein, the evaluation method includes: confirming that the resolution of the image of the movable object 10 to 13 detected from target image information is smaller than the threshold value (first threshold value); selecting the simplified model (the low resolution model 5) from the plurality of trained models in response to confirming that the resolution is smaller than the threshold value (first threshold value); and inputting the one or plurality of pieces of whole information I11 to I13 of the movable object 10 detected from the target image information, into the simplified model (the low resolution model 5) to allow the simplified model (the low resolution model 5) to output the evaluation O1 of the moving direction of the movable object 10 detected from the target image information. This configuration enables improvement of accuracy of evaluation of the moving direction of the movable object 10 to 13.

Or, the evaluation method includes: confirming that the resolution of the image of the movable object 10 to 13 detected from target image information is equal to or greater than the threshold value (first threshold value); selecting the detailed model (the middle resolution model 6, the high resolution model 7) from the plurality of trained models in response to confirming that the resolution is equal to or greater than the threshold value (first threshold value); and inputting at least one of the one or plurality of pieces of whole information I11 to I13 as well as the one or plurality of pieces of part information I21 to I23, I31, of the movable object 10 to 13 detected from the target image information, into the detailed model (the middle resolution model 6, the high resolution model 7), to allow the detailed model (the middle resolution model 6, the high resolution model 7) to output the evaluation O2, O3 of the moving direction of the movable object 10 detected from the target image information. This configuration enables improvement of accuracy of evaluation of the moving direction of the movable object 10 to 13.

In the evaluation method, the resolution is determined based on the area of the bounding box B, B1 to B3 of the movable object 10 to 13 detected from the target image information. This configuration enables improvement of accuracy of evaluation of the moving direction of the movable object 10 to 13.

In the evaluation method, the one or plurality of pieces of whole information I11 to I13 include at least one of: a position of the movable object 10 to 13; a speed of the movable object 10 to 13; or an image of a whole (the bounding box B, B1 to B3) of the movable object 10 to 13. This configuration enables improvement of accuracy of evaluation of the moving direction of the movable object 10 to 13.

In the evaluation method, the one or plurality of pieces of part information I21, I22, I23, I31 include at least one of: one or more positions of the one or plurality of parts R, P of the movable object 10 to 13; one or more directions of the one or plurality of parts R, P of the movable object 10 to 13; one or more images of the one or plurality of parts R, P of the movable object 10 to 13; or information based on one or more relationships among the plurality of parts R, P of the movable object 10 to 13. This configuration enables improvement of accuracy of evaluation of the moving direction of the movable object 10 to 13.

In the evaluation method, the one or more positions of the one or plurality of parts R, P include a position of a face of the movable object 10 to 13. This configuration enables improvement of accuracy of evaluation of the moving direction of the movable object 10 to 13.

In the evaluation method, the one or more directions of the one or plurality of parts R, P include at least one of: a direction of a face of the movable object 10 to 13; or a line of sight of the movable object 10 to 13. This configuration enables improvement of accuracy of evaluation of the moving direction of the movable object (10 to 13).

In the evaluation method, the one or more images of the one or plurality of parts R, P include an image of a face of the movable object 10 to 13. This configuration enables improvement of accuracy of evaluation of the moving direction of the movable object 10 to 13.

In the evaluation method, the information based on one or more relationships among the plurality of parts R, P includes information on a pose of the movable object 10 to 13. This configuration enables improvement of accuracy of evaluation of the moving direction of the movable object 10 to 13.

In the evaluation method, the evaluation of the moving direction of the movable object 10 to 13 includes a probability that the moving direction of the movable object 10 to 13 is the first moving direction and a probability that the moving direction of the movable object 10 to 13 is the second moving direction. The first moving direction is a direction in which the movable object 10 to 13 moves toward a target object (the movable device 1). The second moving direction is a direction in which the movable object 10 to 13 avoids the target object (the movable device 1). This configuration enables efficient movement of the target object in consideration of the moving direction of the movable object 10 to 13.

From another point of view, the aforementioned evaluation method is performed by the arithmetic circuit 23 accessible to the storage device 22 storing a plurality of trained models. The plurality of trained models includes: the first model (the middle resolution model 6) trained to, in response to input of one or plurality of pieces of whole information I11 to I13 based on a whole (the bounding box B, B1 to B3) of the movable object 10 to 13 in image information and one or plurality of pieces of first part information I21 to I23 based on one or plurality of first parts R of the movable object 10 to 13, output the evaluation O2 of the moving direction of the movable object 10 to 13; and the second model (the high resolution model 7) trained to, in response to input of at least one of the one or plurality of pieces of whole information I11 to I13, at least one of the one or plurality of pieces of first part information I21 to I23, and one or plurality of pieces of second part information I31 based on one or plurality of second parts P of the movable object 10 to 13, output the evaluation O3 of the moving direction of the movable object 10 to 13. The one or plurality of second parts P are smaller than the one or plurality of first parts R.

Herein, the evaluation method includes: confirming that the resolution of the image of the movable object 10 to 13 detected from target image information is smaller than the threshold value (second threshold value); selecting the first model (the middle resolution model 6) from the plurality of trained models in response to confirming that the resolution is smaller than the threshold value (second threshold value); and inputting the one or plurality of pieces of whole information I11 to I13 and the one or plurality of pieces of first part information I21 to I23, of the movable object 10 to 13 detected from the target image information, into the first model (the middle resolution model 6), to allow the first model (the middle resolution model 6) to output the evaluation O2 of the moving direction of the movable object 10 to 13 detected from the target image information. This configuration enables improvement of accuracy of evaluation of the moving direction of the movable object 10 to 13.

Or, the evaluation method includes: confirming that the resolution of the image of the movable object 10 to 13 detected from target image information is equal to or greater than the threshold value (second threshold value); selecting the second model (the high resolution model 7) from the plurality of trained models in response to confirming that the resolution is equal to or greater than the threshold value (second threshold value); and inputting at least one of the one or plurality of pieces of whole information I11 to I13, at least one of the one or plurality of pieces of first part information I21 to I23, and at least one of the one or plurality of pieces of second part information I31, of the movable object 10 to 13 detected from the target image information, into the second model (the high resolution model 7), to allow the second model (the high resolution model 7) to output the evaluation O3 of the moving direction of the movable object 10 to 13 detected from the target image information. This configuration enables improvement of accuracy of evaluation of the moving direction of the movable object 10 to 13.

The aforementioned program is a program for performing the aforementioned evaluation method, by the arithmetic circuit 23. This configuration enables improvement of accuracy of evaluation of the moving direction of the movable object 10 to 13.

The aforementioned evaluation system 2 includes: the storage device 22 storing a plurality of trained models; and the arithmetic circuit 23 accessible to the storage device 22. The plurality of trained models includes: the simplified model (the low resolution model 5) trained to, in response to input of one or plurality of pieces of whole information I11 to I13 based on a whole (the bounding box B, B1 to B3) of the movable object 10 to 13 in image information, output evaluation of the moving direction of the movable object 10; and the detailed model (the middle resolution model 6, the high resolution model 7) trained to, in response to input of at least one of the one or plurality of pieces of whole information I11 to I13 and one or plurality of pieces of part information I21 to I23, I31 based on one or plurality of parts R, P of the movable object 10, output evaluation of the moving direction of the movable object 10. The arithmetic circuit 23 is configured to, when the resolution of the image of the movable object 10 to 13 detected from target image information is smaller than the threshold value (first threshold value), select the simplified model (the low resolution model 5) from the plurality of trained models, and input the one or plurality of pieces of whole information I11 to I13 of the movable object 10 to 13 detected from the target image information, into the simplified model (the low resolution model 5) to allow the simplified model (the low resolution model 5) to output the evaluation O1 of the moving direction of the movable object 10 detected from the target image information. The arithmetic circuit 23 is configured to, when the resolution is equal to or greater than the threshold value (first threshold value), select the detailed model (the middle resolution model 6, the high resolution model 7) from the plurality of trained models, and input at least one of the one or plurality of pieces of whole information I11 to I13 as well as the one or plurality of pieces of part information I21 to I23, of the movable object 10 detected from the target image information, into the detailed model (the middle resolution model 6, the high resolution model 7), to allow the detailed model (the middle resolution model 6, the high resolution model 7) to output the evaluation O2, O3 of the moving direction of the movable object 10 to 13 detected from the target image information. This configuration enables improvement of accuracy of evaluation of the moving direction of the movable object 10 to 13.

The aforementioned evaluation system 2 includes: the storage device 22 storing a plurality of trained models; and the arithmetic circuit 23 accessible to the storage device 22. The plurality of trained models includes: the first model (the middle resolution model 6) trained to, in response to input of one or plurality of pieces of whole information I11 to I13 based on a whole (the bounding box B, B1 to B3) of the movable object 10 to 13 in image information and one or plurality of pieces of first part information I21 to I23 based on one or plurality of first parts R of the movable object 10 to 13, output the evaluation O2 of the moving direction of the movable object 10 to 13; and the second model (the high resolution model 7) trained to, in response to input of at least one of the one or plurality of pieces of whole information I11 to I13, at least one of the one or plurality of pieces of first part information I21 to I23, and one or plurality of pieces of second part information I31 based on one or plurality of second parts P of the movable object 10 to 13, output the evaluation O3 of the moving direction of the movable object 10 to 13. The one or plurality of second parts P are smaller than the one or plurality of first parts R. The arithmetic circuit 23 is configured to, when the resolution of the image of the movable object 10 to 13 detected from target image information is smaller than the threshold value (second threshold value), select the first model (the middle resolution model 6) from the plurality of trained models, and input the one or plurality of pieces of whole information I11 to I13 and the one or plurality of pieces of first part information I21 to I23, of the movable object 10 to 13 detected from the target image information, into the first model (the middle resolution model 6), to allow the first model (the middle resolution model 6) to output the evaluation O2 of the moving direction of the movable object 10 to 13 detected from the target image information. The arithmetic circuit 23 is configured to, when the resolution is equal to or greater than the threshold value (second threshold value), select the second model (the high resolution model 7) from the plurality of trained models, and input at least one of the one or plurality of pieces of whole information I11 to I13, at least one of the one or plurality of pieces of first part information I21 to I23, and at least one of the one or plurality of pieces of second part information I31, of the movable object 10 to 13 detected from the target image information, into the second model (the high resolution model 7), to allow the second model (the high resolution model 7) to output the evaluation O3 of the moving direction of the movable object 10 to 13 detected from the target image information. This configuration enables improvement of accuracy of evaluation of the moving direction of the movable object (10 to 13).

### [2. VARIATIONS]

Embodiments of the present disclosure are not limited to the above embodiment. The above embodiment may be modified in various ways in accordance with designs or the like to an extent that they can achieve the problem of the present disclosure. Hereinafter, some variations or modifications of the above embodiment will be listed. One or more of the variations or modifications described below may apply in combination with one or more of the others.

In one variation, the plurality of trained models may include not all of the low resolution model 5, the middle resolution model 6 and the high resolution model 7 but any two of these. For example, the arithmetic circuit 23 may select the low resolution model 5 when the resolution of the image of the movable object 10 detected from the target image information is smaller than a threshold value, and may select the middle resolution model 6 or the high resolution model 7 when the resolution of the image of the movable object 10 detected from the target image information is equal to or greater than the threshold value. For example, the arithmetic circuit 23 may select the middle resolution model 6 when the resolution of the image of the movable object 10 detected from the target image information is smaller than a threshold value, and may select the high resolution model 7 when the resolution of the image of the movable object 10 detected from the target image information is equal to or greater than the threshold value.

In one variation, the simplified model used as the low resolution model 5 may be trained to, in response to input of one or plurality of pieces of the whole information I11 to I13 based on a whole of the movable object 10 in the image information, output the evaluation of the moving direction of the movable object 10. In the simplified model, the number of pieces of the whole information may not be limited particularly.

In one variation, the detailed model used as the middle resolution model 6 or the high resolution model 7 may be trained to, in response to input of at least one of the one or plurality of pieces of whole information I11 to I13 based on a whole of the movable object 10 in the image information and one or plurality of pieces of part information I21 to I23 based on one or plurality of parts of the movable object 10 in the image information, output evaluation of the moving direction of the movable object 10. In the detailed model, the number of pieces of the whole information and the number of pieces of the part information may be not be limited particularly. Especially, the detailed model may not always be required to use all of pieces of the whole information used in the simplified model.

In one variation, the first model used as the middle resolution model 6 may be trained to, in response to input of one or plurality of pieces of whole information I11 to I13 based on a whole of the movable object 10 in the image information and one or plurality of pieces of first part information I21 to I23 based on one or plurality of first parts of the movable object 10 in the image information, output evaluation of the moving direction of the movable object 10. In the first model, the number of pieces of the whole information and the number of pieces of the first part information may not be limited particularly.

In one variation, the second model used as the high resolution model 7 may be trained to, in response to input of at least one of the one or plurality of pieces of whole information I11 to I13 based on a whole of the movable object 10 in the image information, at least one of one or plurality of pieces of first part information I21 to I23 based on one or plurality of first parts of the movable object 10 in the image information, and one or plurality of pieces of second part information I31 based on one or plurality of second parts P of the movable object 10 in the image information, output evaluation of the moving direction of the movable object 10. In the second model, the number of pieces of the whole information, the number of pieces of the first part information and the number of pieces of the second part information may not be limited particularly. Especially, the second model may not always be required to use all of pieces of the whole information and all of pieces of the first part information, used in the first model.

In one variation, the interface 21 of the evaluation system 2 may not always be required to include both of the input output device and the communication device.

In one variation, the imaging system 3 may include a plurality of cameras with different performances (optical resolutions). The evaluation system 2 may perform evaluation of a moving direction of a movable object for each of pieces of the target image information individually obtained from the plurality of cameras with different performances (optical resolutions).

In one variation, the evaluation system 2 may not always be required to be mounted on the movable device 1. The evaluation system 2 is applicable to a device or system other than the movable device 1. For example, the evaluation system 2 may be used in an alarm system for outputting alarm for a possible crash with the movable object 10. The evaluation system 2 may be realized by a plurality of computer systems such as servers. This means that it is not necessary to aggregate a plurality of functions (components) of the evaluation system 2 in a single housing or casing but the plurality of components of the evaluation system 2 may be provided by being distributed to a plurality of housings or casings. At least one function of the evaluation system 2, e.g., part of the function of the arithmetic circuit 23, may be realized by the cloud (cloud computing) or the like, for example.

### [3. ASPECTS]

As apparent from the above embodiment and variations, the present disclosure includes the following aspects. Hereinafter, reference signs in parenthesis are attached for the purpose of clearly showing correspondence with the embodiments only.

A first aspect is an evaluation method performed by an arithmetic circuit (23) accessible to a storage device (22) storing a plurality of trained models. The plurality of trained models includes: a simplified model (the low resolution model 5) trained to, in response to input of one or plurality of pieces of whole information (I11 to 113) based on a whole (the bounding box B, B1 to B3) of a movable object (10 to 13) in image information, output evaluation of a moving direction of the movable object (10); and a detailed model (the middle resolution model 6, the high resolution model 7) trained to, in response to input of at least one of the one or plurality of pieces of whole information (I11 to I13) and one or plurality of pieces of part information (I21 to I23, I31) based on one or plurality of parts (R, P) of the movable object (10), output evaluation of the moving direction of the movable object (10). The evaluation method includes, when a resolution of an image of the movable object (10 to 13) detected from target image information is smaller than a threshold value (first threshold value), selecting the simplified model (the low resolution model 5) from the plurality of trained models, and inputting the one or plurality of pieces of whole information (I11 to 113) of the movable object (10 to 13) detected from the target image information, into the simplified model (the low resolution model 5) to allow the simplified model (the low resolution model 5) to output evaluation (O1) of the moving direction of the movable object (10) detected from the target image information. The evaluation method includes, when the resolution is equal to or greater than the threshold value (first threshold value), selecting the detailed model (the middle resolution model 6, the high resolution model 7) from the plurality of trained models, and inputting at least one of the one or plurality of pieces of whole information (I11 to 113) as well as the one or plurality of pieces of part information (I21 to I23, I31), of the movable object (10) detected from the target image information, into the detailed model (the middle resolution model 6, the high resolution model 7), to allow the detailed model (the middle resolution model 6, the high resolution model 7) to output evaluation (O2, O3) of the moving direction of the movable object (10 to 13) detected from the target image information. This aspect enables improvement of accuracy of evaluation of the moving direction of the movable object (10 to 13).

A second aspect is an evaluation method performed by an arithmetic circuit (23) accessible to a storage device (22) storing a plurality of trained models. The plurality of trained models includes: a simplified model (the low resolution model 5) trained to, in response to input of one or plurality of pieces of whole information (I11 to 113) based on a whole (the bounding box B, B1 to B3) of a movable object (10 to 13) in image information, output evaluation of a moving direction of the movable object (10); and a detailed model (the middle resolution model 6, the high resolution model 7) trained to, in response to input of at least one of the one or plurality of pieces of whole information (I11 to I13) and one or plurality of pieces of part information (I21 to I23, I31) based on one or plurality of parts (R, P) of the movable object (10), output evaluation of the moving direction of the movable object (10). The evaluation method includes: confirming that a resolution of an image of the movable object (10 to 13) detected from target image information is smaller than a threshold value (first threshold value); selecting the simplified model (the low resolution model 5) from the plurality of trained models in response to confirming that the resolution is smaller than the threshold value (first threshold value); and inputting the one or plurality of pieces of whole information (I11 to 113) of the movable object (10) detected from the target image information, into the simplified model (the low resolution model 5) to allow the simplified model (the low resolution model 5) to output evaluation (O1) of the moving direction of the movable object (10) detected from the target image information. This aspect enables improvement of accuracy of evaluation of the moving direction of the movable object (10 to 13).

A third aspect is an evaluation method performed by an arithmetic circuit (23) accessible to a storage device (22) storing a plurality of trained models. The plurality of trained models includes: a simplified model (the low resolution model 5) trained to, in response to input of one or plurality of pieces of whole information (I11 to 113) based on a whole (the bounding box B, B1 to B3) of a movable object (10 to 13) in image information, output evaluation of a moving direction of the movable object (10); and a detailed model (the middle resolution model 6, the high resolution model 7) trained to, in response to input of at least one of the one or plurality of pieces of whole information (I11 to I13) and one or plurality of pieces of part information (I21 to I23, I31) based on one or plurality of parts (R, P) of the movable object (10), output evaluation of the moving direction of the movable object (10). The evaluation method includes: confirming that a resolution of an image of the movable object (10 to 13) detected from target image information is equal to or greater than a threshold value (first threshold value); selecting the detailed model (the middle resolution model 6, the high resolution model 7) from the plurality of trained models in response to confirming that the resolution is equal to or greater than the threshold value (first threshold value); and inputting at least one of the one or plurality of pieces of whole information (I11 to I13) as well as the one or plurality of pieces of part information (I21 to I23, I31), of the movable object (10 to 13) detected from the target image information, into the detailed model (the middle resolution model 6, the high resolution model 7), to allow the detailed model (the middle resolution model 6, the high resolution model 7) to output evaluation (O2, O3) of the moving direction of the movable object (10) detected from the target image information. This aspect enables improvement of accuracy of evaluation of the moving direction of the movable object (10 to 13).

A fourth aspect is an evaluation method based on any one of the first to third aspects. In the fourth aspect, the resolution is determined based on an area of a bounding box (B, B1 to B3) of the movable object (10 to 13) detected from the target image information. This aspect enables reduction of cost for facilities necessary to implement the evaluation method because there is no need to measure the distance (D1 to D3) actually.

A fifth aspect is an evaluation method based on any one of the first to fourth aspects. In the fifth aspect, the one or plurality of pieces of whole information (I11 to 113) include at least one of: a position of the movable object (10 to 13); a speed of the movable object (10 to 13); or an image of a whole (the bounding box B, B1 to B3) of the movable object (10 to 13). This aspect enables improvement of accuracy of evaluation of the moving direction of the movable object (10 to 13).

A sixth aspect is an evaluation method based on any one of the first to fifth aspects. In the sixth aspect, the one or plurality of pieces of part information (I21, I22, I23, I31) include at least one of: one or more positions of the one or plurality of parts (R, P) of the movable object (10 to 13); one or more directions of the one or plurality of parts (R, P) of the movable object (10 to 13); one or more images of the one or plurality of parts (R, P) of the movable object (10 to 13); or information based on one or more relationships among the plurality of parts (R, P) of the movable object (10 to 13). This aspect enables improvement of accuracy of evaluation of the moving direction of the movable object (10 to 13).

A seventh aspect is an evaluation method based on the sixth aspect. In the seventh aspect, the one or more positions of the one or plurality of parts (R, P) include a position of a face of the movable object (10 to 13). This aspect enables improvement of accuracy of evaluation of the moving direction of the movable object (10 to 13).

An eighth aspect is an evaluation method based on the sixth or seventh aspect. In the eighth aspect, the one or more directions of the one or plurality of parts (R, P) include at least one of: a direction of a face of the movable object (10 to 13); or a line of sight of the movable object (10 to 13). This aspect enables improvement of accuracy of evaluation of the moving direction of the movable object (10 to 13).

A ninth aspect is an evaluation method based on any one of the sixth to eighth aspects. In the ninth aspect, the one or more images of the one or plurality of parts (R, P) include an image of a face of the movable object (10 to 13). This aspect enables improvement of accuracy of evaluation of the moving direction of the movable object (10 to 13).

A tenth aspect is an evaluation method based on any one of the sixth to ninth aspects. In the tenth aspect, the information based on one or more relationships among the plurality of parts (R, P) includes information on a pose of the movable object (10 to 13). This aspect enables improvement of accuracy of evaluation of the moving direction of the movable object (10 to 13).

An eleventh aspect is an evaluation method based on any one of the first to tenth aspects. In the tenth aspect, evaluation of a moving direction of the movable object (10 to 13) includes a probability that the moving direction of the movable object (10 to 13) is a first moving direction and a probability that the moving direction of the movable object (10 to 13) is a second moving direction. The first moving direction is a direction in which the movable object (10 to 13) moves toward a target object (the movable device 1). The second moving direction is a direction in which the movable object (10 to 13) avoids the target object (the movable device 1). This aspect enables efficient movement of the target object in consideration of the moving direction of the movable object (10 to 13).

A twelfth aspect is an evaluation method performed by an arithmetic circuit (23) accessible to a storage device (22) storing a plurality of trained models. The plurality of trained models includes: a first model (the middle resolution model 6) trained to, in response to input of one or plurality of pieces of whole information (I11 to 113) based on a whole (the bounding box B, B1 to B3) of a movable object (10 to 13) in image information and one or plurality of pieces of first part information (I21 to I23) based on one or plurality of first parts (R) of the movable object (10 to 13), output evaluation (O2) of a moving direction of the movable object (10 to 13); and a second model (the high resolution model 7) trained to, in response to input of at least one of the one or plurality of pieces of whole information (I11 to I13), at least one of the one or plurality of pieces of first part information (I21 to I23), and one or plurality of pieces of second part information (I31) based on one or plurality of second parts (P) of the movable object (10 to 13), output evaluation (O3) of the moving direction of the movable object (10 to 13). The one or plurality of second parts (P) are smaller than the one or plurality of first parts (R). The evaluation method includes, when a resolution of an image of the movable object (10 to 13) detected from target image information is smaller than a threshold value (second threshold value), selecting the first model (the middle resolution model 6) from the plurality of trained models, and inputting the one or plurality of pieces of whole information (I11 to I13) and the one or plurality of pieces of first part information (I21 to I23), of the movable object (10 to 13) detected from the target image information, into the first model (the middle resolution model 6), to allow the first model (the middle resolution model 6) to output evaluation (O2) of the moving direction of the movable object (10 to 13) detected from the target image information. The evaluation method includes, when the resolution is equal to or greater than the threshold value (second threshold value), selecting the second model (the high resolution model 7) from the plurality of trained models, and inputting at least one of the one or plurality of pieces of whole information (I11 to I13), at least one of the one or plurality of pieces of first part information (I21 to I23), and at least one of the one or plurality of pieces of second part information (I31), of the movable object (10 to 13) detected from the target image information, into the second model (the high resolution model 7), to allow the second model (the high resolution model 7) to output evaluation (O3) of the moving direction of the movable object (10 to 13) detected from the target image information. This aspect enables improvement of accuracy of evaluation of the moving direction of the movable object (10 to 13).

A thirteenth aspect is an evaluation method performed by an arithmetic circuit (23) accessible to a storage device (22) storing a plurality of trained models. The plurality of trained models includes: a first model (the middle resolution model 6) trained to, in response to input of one or plurality of pieces of whole information (I11 to 113) based on a whole (the bounding box B, B1 to B3) of a movable object (10 to 13) in image information and one or plurality of pieces of first part information (I21 to I23) based on one or plurality of first parts (R) of the movable object (10 to 13), output evaluation (O2) of a moving direction of the movable object (10 to 13); and a second model (the high resolution model 7) trained to, in response to input of at least one of the one or plurality of pieces of whole information (I11 to I13), at least one of the one or plurality of pieces of first part information (I21 to I23), and one or plurality of pieces of second part information (I31) based on one or plurality of second parts (P) of the movable object (10 to 13), output evaluation (O3) of the moving direction of the movable object (10 to 13). The one or plurality of second parts (P) are smaller than the one or plurality of first parts (R). The evaluation method includes: confirming that a resolution of an image of the movable object (10 to 13) detected from target image information is smaller than a threshold value (second threshold value); selecting the first model (the middle resolution model 6) from the plurality of trained models in response to confirming that the resolution is smaller than the threshold value (second threshold value); and inputting the one or plurality of pieces of whole information (I11 to I13) and the one or plurality of pieces of first part information (I21 to I23), of the movable object (10 to 13) detected from the target image information, into the first model (the middle resolution model 6), to allow the first model (the middle resolution model 6) to output evaluation (O2) of the moving direction of the movable object (10 to 13) detected from the target image information. This aspect enables improvement of accuracy of evaluation of the moving direction of the movable object (10 to 13).

A fourteenth aspect is an evaluation method performed by an arithmetic circuit (23) accessible to a storage device (22) storing a plurality of trained models. The plurality of trained models includes: a first model (the middle resolution model 6) trained to, in response to input of one or plurality of pieces of whole information (I11 to 113) based on a whole (the bounding box B, B1 to B3) of a movable object (10 to 13) in image information and one or plurality of pieces of first part information (I21 to I23) based on one or plurality of first parts (R) of the movable object (10 to 13), output evaluation (O2) of a moving direction of the movable object (10 to 13); and a second model (the high resolution model 7) trained to, in response to input of at least one of the one or plurality of pieces of whole information (I11 to I13), at least one of the one or plurality of pieces of first part information (I21 to I23), and one or plurality of pieces of second part information (I31) based on one or plurality of second parts (P) of the movable object (10 to 13), output evaluation (O3) of the moving direction of the movable object (10 to 13). The one or plurality of second parts (P) are smaller than the one or plurality of first parts (R). The evaluation method includes: confirming that a resolution of an image of the movable object (10 to 13) detected from target image information is equal to or greater than a threshold value (second threshold value); selecting the second model (the high resolution model 7) from the plurality of trained models in response to confirming that the resolution is equal to or greater than the threshold value (second threshold value); and inputting at least one of the one or plurality of pieces of whole information (I11 to I13), at least one of the one or plurality of pieces of first part information (I21 to I23), and at least one of the one or plurality of pieces of second part information (I31), of the movable object (10 to 13) detected from the target image information, into the second model (the high resolution model 7), to allow the second model (the high resolution model 7) to output evaluation (O3) of the moving direction of the movable object (10 to 13) detected from the target image information. This aspect enables improvement of accuracy of evaluation of the moving direction of the movable object (10 to 13).

A fifteenth aspect is a program for performing the evaluation method according to any one of the first to fourteenth aspects, by the arithmetic circuit (23). This aspect enables improvement of accuracy of evaluation of the moving direction of the movable object (10 to 13).

A sixteenth aspect is an evaluation system (2) and includes: a storage device (22) storing a plurality of trained models; and an arithmetic circuit (23) accessible to the storage device (22). The plurality of trained models includes: a simplified model (the low resolution model 5) trained to, in response to input of one or plurality of pieces of whole information (I11 to I13) based on a whole (the bounding box B, B1 to B3) of a movable object (10 to 13) in image information, output evaluation of a moving direction of the movable object (10); and a detailed model (the middle resolution model 6, the high resolution model 7) trained to, in response to input of at least one of the one or plurality of pieces of whole information (I11 to 113) and one or plurality of pieces of part information (I21 to I23, I31) based on one or plurality of parts (R, P) of the movable object (10), output evaluation of the moving direction of the movable object (10). The arithmetic circuit (23) is configured to, when a resolution of an image of the movable object (10 to 13) detected from target image information is smaller than a threshold value (first threshold value), select the simplified model (the low resolution model 5) from the plurality of trained models, and input the one or plurality of pieces of whole information (I11 to I13) of the movable object (10 to 13) detected from the target image information, into the simplified model (the low resolution model 5) to allow the simplified model (the low resolution model 5) to output evaluation (O1) of the moving direction of the movable object (10) detected from the target image information. The arithmetic circuit (23) is configured to, when the resolution is equal to or greater than the threshold value (first threshold value), select the detailed model (the middle resolution model 6, the high resolution model 7) from the plurality of trained models, and input at least one of the one or plurality of pieces of whole information (I11 to 113) as well as the one or plurality of pieces of part information (I21 to I23), of the movable object (10) detected from the target image information, into the detailed model (the middle resolution model 6, the high resolution model 7), to allow the detailed model (the middle resolution model 6, the high resolution model 7) to output evaluation (O2, O3) of the moving direction of the movable object (10 to 13) detected from the target image information. This aspect enables improvement of accuracy of evaluation of the moving direction of the movable object (10 to 13).

A seventeenth aspect is an evaluation system (2) and includes: a storage device (22) storing a plurality of trained models; and an arithmetic circuit (23) accessible to the storage device (22). The plurality of trained models includes: a first model (the middle resolution model 6) trained to, in response to input of one or plurality of pieces of whole information (I11 to I13) based on a whole (the bounding box B, B1 to B3) of a movable object (10 to 13) in image information and one or plurality of pieces of first part information (I21 to I23) based on one or plurality of first parts (R) of the movable object (10 to 13), output evaluation (O2) of a moving direction of the movable object (10 to 13); and a second model (the high resolution model 7) trained to, in response to input of at least one of the one or plurality of pieces of whole information (I11 to I13), at least one of the one or plurality of pieces of first part information (I21 to I23), and one or plurality of pieces of second part information (I31) based on one or plurality of second parts (P) of the movable object (10 to 13), output evaluation (O3) of the moving direction of the movable object (10 to 13). The one or plurality of second parts (P) are smaller than the one or plurality of first parts (R). The arithmetic circuit (23) is configured to, when a resolution of an image of the movable object (10 to 13) detected from target image information is smaller than a threshold value (second threshold value), select the first model (the middle resolution model 6) from the plurality of trained models, and input the one or plurality of pieces of whole information (I11 to 113) and the one or plurality of pieces of first part information (I21 to I23), of the movable object (10 to 13) detected from the target image information, into the first model (the middle resolution model 6), to allow the first model (the middle resolution model 6) to output evaluation (O2) of the moving direction of the movable object (10 to 13) detected from the target image information. The arithmetic circuit (23) is configured to, when the resolution is equal to or greater than the threshold value (second threshold value), select the second model (the high resolution model 7) from the plurality of trained models, and input at least one of the one or plurality of pieces of whole information (I11 to I13), at least one of the one or plurality of pieces of first part information (I21 to I23), and at least one of the one or plurality of pieces of second part information (I31), of the movable object (10 to 13) detected from the target image information, into the second model (the high resolution model 7), to allow the second model (the high resolution model 7) to output evaluation (O3) of the moving direction of the movable object (10 to 13) detected from the target image information. This aspect enables improvement of accuracy of evaluation of the moving direction of the movable object (10 to 13).

Note that, the second to eleventh aspects may be applicable to the sixteenth or seventeenth aspect with appropriate changes.

### [4. GLOSSARY]

In the present disclosure, terms in relation to machine learning are used with the following definitions.

A "trained model" means an "inference program" where "trained parameters" are embedded.

The "trained parameters" means parameters (coefficients) resulting from training using a learning dataset. The trained parameters are generated by inputting a learning dataset into a training program to mechanically adjust parameters to achieve a particular purpose. Although the trained parameters are adjusted to meet the purpose of training, the trained parameters alone are mere parameters (information such as numerical values) and can function as a trained model only when embedded in an inference program. For example, in the case of deep learning, examples of main components of the trained parameters include parameters for weighting links between nodes.

The "inference program" means a program enabling outputting a particular result in response to input, by applying an embedded trained parameters. For example, this is a program defining a series of computing procedures for applying a trained parameters resulting from training to an image given as input to output a result (authentication or determination) corresponding to the image.

The "learning dataset", which may also be referred to as a training dataset, means secondary processed data generated by performing conversion or processing on raw data using preprocessing such as removal of missing values or outliers, addition of separate data such as label information (ground truth data) or a combination thereof, in order to facilitate analysis by a target training method. The learning dataset may include "augmented" data resulting from particular conversion on raw data.

The "raw data" means data which is firstly obtained by users, benders, other business entities or researchers and converted or processed to be imported into a database.

The "training program" means a program for executing an algorithm for finding a particular rule from the learning dataset to generate a model representing that rule. Concretely, this is a program defining procedures to be executed by a computer in order to realize learning or training by an adopted training method.

### INDUSTRIAL APPLICABILITY

The present disclosure is applicable to evaluation methods, programs (computer programs) and evaluation systems. In more detail, the present disclosure is applicable to an evaluation method, a program (computer program), and an evaluation system regarding evaluation of a moving direction of a movable object present in an image.

### REFERENCE SIGNS LIST

1 Movable Device (Target Object)
2 Evaluation System
22 Storage Device
23 Arithmetic Circuit
5 Low Resolution Model (Simplified Model)
6 Middle Resolution Model (Detailed Model, First Model)
7 High Resolution Model (Detailed Model, Second Model)
10, 11 to 13 Movable Object
B, B1 to B3 Bounding Box
R Part (First Part)
P Part (Second Part)
D1 to D3 Distance
I11 to I13 Whole Information
I21 to I23 Part Information (First Part Information)
I31 Part Information (Second Part Information)
O1 to O3 Evaluation
V1 First Moving Direction
V2 Second Moving Direction

## Claims

1. An evaluation method performed by an arithmetic circuit accessible to a storage device storing a plurality of trained models,
the plurality of trained models including:
a simplified model trained to, in response to input of one or plurality of pieces of whole information based on a whole of a movable object in image information, output evaluation of a moving direction of the movable object; and
a detailed model trained to, in response to input of at least one of the one or plurality of pieces of whole information and one or plurality of pieces of part information based on one or plurality of parts of the movable object, output evaluation of the moving direction of the movable object, and
the evaluation method comprising:
when a resolution of an image of the movable object detected from target image information is smaller than a threshold value, selecting the simplified model from the plurality of trained models, and inputting the one or plurality of pieces of whole information of the movable object detected from the target image information, into the simplified model to allow the simplified model to output evaluation of the moving direction of the movable object detected from the target image information; and
when the resolution is equal to or greater than the threshold value, selecting the detailed model from the plurality of trained models, and inputting at least one of the one or plurality of pieces of whole information as well as the one or plurality of pieces of part information, of the movable object detected from the target image information, into the detailed model, to allow the detailed model to output evaluation of the moving direction of the movable object detected from the target image information.

2. An evaluation method performed by an arithmetic circuit accessible to a storage device storing a plurality of trained models,
the plurality of trained models including:
a simplified model trained to, in response to input of one or plurality of pieces of whole information based on a whole of a movable object in image information, output evaluation of a moving direction of the movable object; and
a detailed model trained to, in response to input of at least one of the one or plurality of pieces of whole information and one or plurality of pieces of part information based on one or plurality of parts of the movable object, output evaluation of the moving direction of the movable object, and
the evaluation method comprising:
confirming that a resolution of an image of the movable object detected from target image information is smaller than a threshold value;
selecting the simplified model from the plurality of trained models in response to confirming that the resolution is smaller than the threshold value; and
inputting the one or plurality of pieces of whole information of the movable object detected from the target image information, into the simplified model to allow the simplified model to output evaluation of the moving direction of the movable object detected from the target image information.

3. An evaluation method performed by an arithmetic circuit accessible to a storage device storing a plurality of trained models,
the plurality of trained models including:
a simplified model trained to, in response to input of one or plurality of pieces of whole information based on a whole of a movable object in image information, output evaluation of a moving direction of the movable object; and
a detailed model trained to, in response to input of at least one of the one or plurality of pieces of whole information and one or plurality of pieces of part information based on one or plurality of parts of the movable object, output evaluation of the moving direction of the movable object, and
the evaluation method comprising:
confirming that a resolution of an image of the movable object detected from target image information is equal to or greater than a threshold value;
selecting the detailed model from the plurality of trained models in response to confirming that the resolution is equal to or greater than the threshold value; and
inputting at least one of the one or plurality of pieces of whole information as well as the one or plurality of pieces of part information, of the movable object detected from the target image information, into the detailed model, to allow the detailed model to output evaluation of the moving direction of the movable object detected from the target image information.

4. The evaluation method according to any one of claims 1 to 3, wherein the resolution is determined based on an area of a bounding box of the movable object detected from the target image information.

5. The evaluation method according to any one of claims 1 to 3, wherein the one or plurality of pieces of whole information include at least one of: a position of the movable object; a speed of the movable object; or an image of a whole of the movable object.

6. The evaluation method according to any one of claims 1 to 3, wherein the one or plurality of pieces of part information include at least one of: one or more positions of the one or plurality of parts of the movable object; one or more directions of the one or plurality of parts of the movable object; one or more images of the one or plurality of parts of the movable object; or information based on one or more relationships among the plurality of parts of the movable object.

7. The evaluation method according to claim 6, wherein the one or more positions of the one or plurality of parts include a position of a face of the movable object.

8. The evaluation method according to claim 6, wherein the one or more directions of the one or plurality of parts include at least one of: a direction of a face of the movable object; or a line of sight of the movable object.

9. The evaluation method according to claim 6, wherein the one or more images of the one or plurality of parts include an image of a face of the movable object.

10. The evaluation method according to claim 6, wherein the information based on one or more relationships among the plurality of parts includes information on a pose of the movable object.

11. The evaluation method according to any one of claims 1 to 3, wherein:
evaluation of a moving direction of the movable object includes a probability that the moving direction of the movable object is a first moving direction and a probability that the moving direction of the movable object is a second moving direction;
the first moving direction is a direction in which the movable object moves toward a target object; and
the second moving direction is a direction in which the movable object avoids the target object.

12. An evaluation method performed by an arithmetic circuit accessible to a storage device storing a plurality of trained models,
the plurality of trained models including:
a first model trained to, in response to input of one or plurality of pieces of whole information based on a whole of a movable object in image information and one or plurality of pieces of first part information based on one or plurality of first parts of the movable object, output evaluation of a moving direction of the movable object; and
a second model trained to, in response to input of at least one of the one or plurality of pieces of whole information, at least one of the one or plurality of pieces of first part information, and one or plurality of pieces of second part information based on one or plurality of second parts of the movable object, output evaluation of the moving direction of the movable object,
the one or plurality of second parts being smaller than the one or plurality of first parts, and
the evaluation method comprising:
when a resolution of an image of the movable object detected from target image information is smaller than a threshold value, selecting the first model from the plurality of trained models, and inputting the one or plurality of pieces of whole information and the one or plurality of pieces of first part information, of the movable object detected from the target image information, into the first model, to allow the first model to output evaluation of the moving direction of the movable object detected from the target image information; and
when the resolution is equal to or greater than the threshold value, selecting the second model from the plurality of trained models, and inputting at least one of the one or plurality of pieces of whole information, at least one of the one or plurality of pieces of first part information, and at least one of the one or plurality of pieces of second part information, of the movable object detected from the target image information, into the second model, to allow the second model to output evaluation of the moving direction of the movable object detected from the target image information.

13. An evaluation method performed by an arithmetic circuit accessible to a storage device storing a plurality of trained models,
the plurality of trained models including:
a first model trained to, in response to input of one or plurality of pieces of whole information based on a whole of a movable object in image information and one or plurality of pieces of first part information based on one or plurality of first parts of the movable object, output evaluation of a moving direction of the movable object; and
a second model trained to, in response to input of at least one of the one or plurality of pieces of whole information, at least one of the one or plurality of pieces of first part information, and one or plurality of pieces of second part information based on one or plurality of second parts of the movable object, output evaluation of the moving direction of the movable object,
the one or plurality of second parts being smaller than the one or plurality of first parts, and
the evaluation method comprising:
confirming that a resolution of an image of the movable object detected from target image information is smaller than a threshold value;
selecting the first model from the plurality of trained models in response to confirming that the resolution is smaller than the threshold value; and
inputting the one or plurality of pieces of whole information and the one or plurality of pieces of first part information, of the movable object detected from the target image information, into the first model, to allow the first model to output evaluation of the moving direction of the movable object detected from the target image information.

14. An evaluation method performed by an arithmetic circuit accessible to a storage device storing a plurality of trained models,
the plurality of trained models including:
a first model trained to, in response to input of one or plurality of pieces of whole information based on a whole of a movable object in image information and one or plurality of pieces of first part information based on one or plurality of first parts of the movable object, output evaluation of a moving direction of the movable object; and
a second model trained to, in response to input of at least one of the one or plurality of pieces of whole information, at least one of the one or plurality of pieces of first part information, and one or plurality of pieces of second part information based on one or plurality of second parts of the movable object, output evaluation of the moving direction of the movable object,
the one or plurality of second parts being smaller than the one or plurality of first parts, and
the evaluation method comprising:
confirming that a resolution of an image of the movable object detected from target image information is equal to or greater than a threshold value;
selecting the second model from the plurality of trained models in response to confirming that the resolution is equal to or greater than the threshold value; and
inputting at least one of the one or plurality of pieces of whole information, at least one of the one or plurality of pieces of first part information, and at least one of the one or plurality of pieces of second part information, of the movable object detected from the target image information, into the second model, to allow the second model to output evaluation of the moving direction of the movable object detected from the target image information.

15. A program for performing the evaluation method according to any one of claims 1 to 3 and 12 to 14, by the arithmetic circuit.

16. An evaluation system comprising:
a storage device storing a plurality of trained models; and
an arithmetic circuit accessible to the storage device,
the plurality of trained models including:
a simplified model trained to, in response to input of one or plurality of pieces of whole information based on a whole of a movable object in image information, output evaluation of a moving direction of the movable object; and
a detailed model trained to, in response to input of at least one of the one or plurality of pieces of whole information and one or plurality of pieces of part information based on one or plurality of parts of the movable object, output evaluation of the moving direction of the movable object, and
the arithmetic circuit being configured to:
when a resolution of an image of the movable object detected from target image information is smaller than a threshold value, select the simplified model from the plurality of trained models, and input the one or plurality of pieces of whole information of the movable object detected from the target image information, into the simplified model to allow the simplified model to output evaluation of the moving direction of the movable object detected from the target image information; and
when the resolution is equal to or greater than the threshold value, select the detailed model from the plurality of trained models, and input at least one of the one or plurality of pieces of whole information as well as the one or plurality of pieces of part information, of the movable object detected from the target image information, into the detailed model, to allow the detailed model to output evaluation of the moving direction of the movable object detected from the target image information.

17. An evaluation system comprising:
a storage device storing a plurality of trained models; and
an arithmetic circuit accessible to the storage device,
the plurality of trained models including:
a first model trained to, in response to input of one or plurality of pieces of whole information based on a whole of a movable object in image information and one or plurality of pieces of first part information based on one or plurality of first parts of the movable object, output evaluation of a moving direction of the movable object; and
a second model trained to, in response to input of at least one of the one or plurality of pieces of whole information, at least one of the one or plurality of pieces of first part information, and one or plurality of pieces of second part information based on one or plurality of second parts of the movable object, output evaluation of the moving direction of the movable object,
the one or plurality of second parts being smaller than the one or plurality of first parts, and
the arithmetic circuit being configured to:
when a resolution of an image of the movable object detected from target image information is smaller than a threshold value, select the first model from the plurality of trained models, and input the one or plurality of pieces of whole information and the one or plurality of pieces of first part information, of the movable object detected from the target image information, into the first model, to allow the first model to output evaluation of the moving direction of the movable object detected from the target image information; and
when the resolution is equal to or greater than the threshold value, select the second model from the plurality of trained models, and input at least one of the one or plurality of pieces of whole information, at least one of the one or plurality of pieces of first part information, and at least one of the one or plurality of pieces of second part information, of the movable object detected from the target image information, into the second model, to allow the second model to output evaluation of the moving direction of the movable object detected from the target image information.
